# EUROPEAN PATENT APPLICATION

(11) **EP 4 535 885 A1**
(43) Date of publication of application: **09.04.2025**
(21) Application number: 23848931.4
(22) Date of filing: 24.04.2023
(51) Int. Cl.: H04W 56/00

(54) **SYNCHRONIZATION METHOD AND APPARATUS IN SATELLITE NETWORK**

(30) Priority: 01.08.2022 CN 202210913969
(71) Applicant: Datang Mobile Communications Equipment Co., Ltd., Beijing 100085 (CN)
(72) Inventor: JIA, Yinan, Beijing 100085 (CN); MIAO, Jinhua, Beijing 100085 (CN); LIANG, Jing, Beijing 100085 (CN); ZHANG, Xiangdong, Beijing 100085 (CN); XU, Meng, Beijing 100085 (CN)
(74) Representative: Studio Torta S.p.A.
(86) International application number: PCT/CN2023/090398
(87) International publication number: WO 2024/027220

(57) **Abstract**

The present application discloses a synchronization method and a synchronization apparatus in a satellite network, which is used to provide a solution of updating uplink/downlink synchronization for a terminal regarding a problem of uplink/downlink out-of-synchronization for the terminal caused by changes in satellite position, when the satellite providing beam coverage for an area to which the terminal belongs changes but a cell identifier is unchanged. The method provided by the present application includes: when a cell of a first satellite and a cell of a second satellite have a same cell identifier, performing a synchronization process between the terminal and the cell of the second satellite, thereby avoiding a problem of uplink/downlink out-of-synchronization for the terminal caused by changes in satellite position.

## Description

### CROSS-REFERENCE TO RELATED APPLICATIONS

The present application claims priority to Chinese Patent Application No. 202210913969.2, filed on August 01, 2022 to the China National Intellectual Property Administration and entitled "SYNCHRONIZATION METHOD AND SYNCHRONIZATION APPARATUS IN SATELLITE NETWORK", which is incorporated into the present application by reference in its entirety.

### TECHNICAL FIELD

The present application relates to the field of communication technology and, in particular, to a synchronization method and a synchronization apparatus in a satellite network.

### BACKGROUND

Due to the unique geographical location of satellites, they have advantages such as wide coverage, easy deployment, and stable channels, which can compensate for the shortcomings of terrestrial networks. The integration of terrestrial networks and satellite networks has received widespread attention. In satellite networks, low orbit satellites have lower propagation delay and more deployable resources, which are currently the research focus.

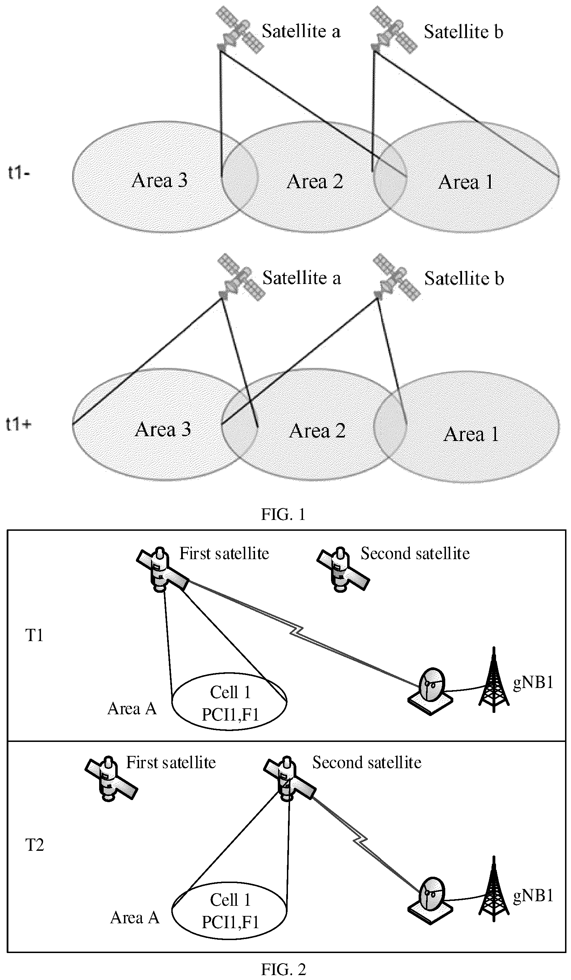

Based on the characteristic of low orbit satellites moving along their orbits with high speeds, two types of cells have been planned: a quasi-earth fixed cell (quasi-earth fixed cell) and an earth moving cell (earth moving cell); the quasi-earth fixed cell refers to a certain geographic area on Earth onto which a beam is caused to be projected fixedly and constantly during a certain time duration by adjusting an angle of an antenna through a satellite. For example, as shown in FIG. 1, a satellite a and a satellite b fixedly cover an area 1 and an area 2 respectively before a time instant t1 (t1-), and change to cover the area 2 and an area 3 respectively at a time instant t1 (t1+).

### SUMMARY

Embodiments of the present application provides a synchronization method and a synchronization apparatus in a satellite network, which is used to provide a solution of updating uplink/downlink synchronization for a terminal regarding a problem of uplink/downlink out-of-synchronization for the terminal caused by changes in satellite position, when the satellite providing beam coverage for an area to which the terminal belongs changes but a cell identifier is unchanged.

At a terminal side, an embodiment of the present application provides a synchronization method in a satellite network, including:
determining a cell of a first satellite and a cell of a second satellite have a same cell identifier, where the cell of the first satellite is a cell currently serving a terminal; and
performing a synchronization process between the terminal and the cell of the second satellite.

According to the method, when it is determined a cell of a first satellite and a cell of a second satellite have a same cell identifier, where the cell of the first satellite is a cell currently serving a terminal; a synchronization process between the terminal and the cell of the second satellite is performed, so that when a satellite providing beam coverage for an area to which the terminal belongs changes but a cell identifier is unchanged, a solution of updating uplink/downlink synchronization for a terminal is provided, and a problem of uplink/downlink out-of-synchronization for the terminal caused by changes in satellite position is solved.

In some implementations, the performing the synchronization process between the terminal and the cell of the second satellite includes:
when receiving indication information for a notification to perform the synchronization process between the terminal and the cell of the second satellite, performing downlink synchronization with the cell of the second satellite according to a synchronization signal block corresponding to the cell of the second satellite; and/or,
acquiring, by sending signal for uplink synchronization, a timing advance value for accessing the cell of the second satellite.

In some implementations, the indication information includes one of following information or a combination of the following information:
an indication that a cell identifier is unchanged;
an indication or time that the second satellite starts to perform beam coverage over the area;
time that the first satellite stops performing beam coverage over the area;
time of starting to synchronize to the cell of the second satellite;
information of sounding reference signal;
random access resource information;
ephemeris information of the second satellite;
common timing advance value information of the second satellite;
an indication for requesting the terminal to report position information; or
signal information used by the cell of the second satellite for the downlink synchronization.

In some implementations, the acquiring, by sending the signal for uplink synchronization, the timing advance value for accessing the cell of the second satellite includes:
sending a random access preamble code or other uplink signal; and
receiving a random access response, a media access control control element MAC CE, downlink control information DCI or a dedicated signaling, and acquiring the timing advance value for accessing the cell of the second satellite.

In some implementations, the method further includes:
sending position information of the terminal.

In some implementations, during the synchronization process with the cell of the second satellite, uplink/downlink synchronization is maintained with the cell of the first satellite.

In some implementations, the method further includes:
starting to synchronize to the cell of the second satellite according to configuration of a network side; or,
immediately starting to synchronize to the cell of the second satellite after acquiring a timing advance value for accessing the cell through the second satellite; or,
starting to synchronize to the cell of the second satellite, when receiving an indication from a network side.

In some implementations, performing, by the terminal, the synchronization process between the terminal and the cell of the second satellite includes:
performing the synchronization process between the terminal and the cell of the second satellite based on an indication from a network side, where the indication from the network side specifically includes one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

In some implementations, when one of following conditions or a combination of following conditions are met, determining that the cell of the first satellite and the cell of the second satellite have the same cell identifier:
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

In some implementations, before the performing the synchronization process between the terminal and the cell of the second satellite, the method further includes:
acquiring common information of the second satellite, where the common information includes a scheduling time offset of the cell of the second satellite, or a TA value of the cell of the second satellite, or basic configuration information of the cell of the second satellite; and
applying the common information of the second satellite.

At a network side, an embodiment of the present application provides a synchronization method in a satellite network, including:
determining a cell of a first satellite and a cell of a second satellite have a same cell identifier, where the cell of the first satellite is a cell currently serving a terminal; and
sending indication information for notifying the terminal in the cell of the first satellite to perform a synchronization process between the terminal and the cell of the second satellite.

In some implementations, the indication information includes one of following information or a combination of the following information:
an indication that a cell identifier is unchanged;
an indication or time that the second satellite starts to provide beam coverage over the area;
time that the first satellite stops performing beam coverage over the area;
time of starting to synchronize to the cell of the second satellite;
information of sounding reference signal;
random access resource information;
ephemeris information of the second satellite;
common timing advance value information of the second satellite;
an indication for requesting the terminal to report position information; or
signal information used by the cell of the second satellite for the downlink synchronization.

In some implementations, the method further includes:
sending, through the second satellite, a synchronization signal block corresponding to the cell of the second satellite, so that the terminal performs downlink synchronization with the cell of the second satellite according to the synchronization signal block corresponding to the cell of the second satellite; and/or,
receiving signal for uplink synchronization with the cell of the second satellite sent by the terminal, where the signal is transparently transmitted by the second satellite, and determining, according to the signal for the uplink synchronization with the cell of the second satellite, a timing advance value for accessing the cell of the second satellite, sending, through the first satellite or the second satellite, the timing advance value to the terminal.

In some implementations, the method further includes:
receiving position information of the terminal, and determining, according to the position information of the terminal, an adjacent terminal of the terminal, and notifying the adjacent terminal that there is no need to send the signal for the uplink synchronization with the cell of the second satellite; and
sending, through the first satellite or the second satellite, the timing advance value to the adjacent terminal.

In some implementations, the indication information includes one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

In some implementations, when one of following conditions or a combination of following conditions are met, determining that the cell of the first satellite and the cell of the second satellite have the same cell identifier:
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

In some implementations, the method further includes:
before the terminal performs the synchronization process between the terminal and the cell of the second satellite, sending common information of the second satellite to the terminal, where the common information includes a scheduling time offset of the cell of the second satellite, or a TA value of the cell of the second satellite, or basic configuration information of the cell of the second satellite.

At a terminal side, an embodiment of the present application provides a synchronization apparatus in a satellite network, including a memory, a transceiver, and a processor;
where the memory is configured to store a computer program; the transceiver is configured to transmit and/or receive data under control of the processor; the processor is configured to read the computer program in the memory and execute following operations:
determining a cell of a first satellite and a cell of a second satellite have a same cell identifier, where the cell of the first satellite is a cell currently serving a terminal; and
performing a synchronization process between the terminal and the cell of the second satellite.

In some implementations, the performing the synchronization process between the terminal and the cell of the second satellite includes:
when receiving indication information for a notification to perform the synchronization process between the terminal and the cell of the second satellite, performing downlink synchronization with the cell of the second satellite according to a synchronization signal block corresponding to the cell of the second satellite; and/or,
acquiring, by sending signal for uplink synchronization, a timing advance value for accessing the cell of the second satellite.

In some implementations, the indication information includes one of following information or a combination of the following information:
an indication that a cell identifier is unchanged;
an indication or time that the second satellite starts to provide beam coverage over the area;
time that the first satellite stops performing beam coverage over the area;
time of starting to synchronize to the cell of the second satellite;
information of sounding reference signal;
random access resource information;
ephemeris information of the second satellite;
common timing advance value information of the second satellite;
an indication for requesting the terminal to report position information; or
signal information used by the cell of the second satellite for the downlink synchronization.

In some implementations, the acquiring, by sending the signal for uplink synchronization, the timing advance value for accessing the cell of the second satellite includes:
sending a random access preamble code or other uplink signal; and
receiving a random access response, a media access control control element MAC CE, downlink control information DCI or a dedicated signaling, and acquiring the timing advance value for accessing the cell of the second satellite.

In some implementations, the processor is further configured to read the computer program in the memory and execute a following operation:
sending, through the transceiver, position information of the terminal.

In some implementations, during the synchronization process with the cell of the second satellite, uplink/downlink synchronization is maintained with the cell of the first satellite.

In some implementations, the processor is further configured to read the computer program in the memory and execute a following operation:
starting to synchronize to the cell of the second satellite according to configuration of a network side; or,
immediately starting to synchronize to the cell of the second satellite after acquiring a timing advance value for accessing the cell through the second satellite; or,
starting to synchronize to the cell of the second satellite, when receiving an indication from a network side.

In some implementations, the performing the synchronization process between the terminal and the cell of the second satellite includes:
performing the synchronization process between the terminal and the cell of the second satellite based on an indication from a network side, where the indication from the network side specifically includes one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

In some implementations, when one of following conditions or a combination of following conditions are met, determining that the cell of the first satellite and the cell of the second satellite have the same cell identifier:
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

In some implementations, before the performing the synchronization process between the terminal and the cell of the second satellite, the processor is further configured to read the computer program in the memory and execute following operations:
acquiring common information of the second satellite, where the common information includes a scheduling time offset of the cell of the second satellite, or a TA value of the cell of the second satellite, or basic configuration information of the cell of the second satellite; and
applying the common information of the second satellite.

At a network side, an embodiment of the present application provides a synchronization apparatus in a satellite network, including a memory, a transceiver, and a processor;
where the memory is configured to store a computer program; the transceiver is configured to transmit and/or receive data under control of the processor; the processor is configured to read the computer program in the memory and execute following operations:
determining a cell of a first satellite and a cell of a second satellite have a same cell identifier, where the cell of the first satellite is a cell currently serving a terminal; and
sending, through the transceiver, indication information for notifying the terminal in the cell of the first satellite to perform a synchronization process between the terminal and the cell of the second satellite.

In some implementations, the indication information includes one of following information or a combination of the following information:
an indication that a cell identifier is unchanged;
an indication or time that the second satellite starts to provide beam coverage over the area;
time that the first satellite stops performing beam coverage over the area;
time of starting to synchronize to the cell of the second satellite;
information of sounding reference signal;
random access resource information;
ephemeris information of the second satellite;
common timing advance value information of the second satellite;
an indication for requesting the terminal to report position information; or
signal information used by the cell of the second satellite for the downlink synchronization.

In some implementations, the processor is further configured to read the computer program in the memory and execute following operations:
sending, through the second satellite, a synchronization signal block corresponding to the cell of the second satellite, so that the terminal performs downlink synchronization with the cell of the second satellite according to the synchronization signal block corresponding to the cell of the second satellite; and/or,
receiving, through the transceiver, signal for uplink synchronization with the cell of the second satellite sent by the terminal, where the signal is transparently transmitted by the second satellite, and determining, according to the signal for the uplink synchronization with the cell of the second satellite, a timing advance value for accessing the cell of the second satellite, sending, through the first satellite or the second satellite, the timing advance value to the terminal.

In some implementations, the processor is further configured to read the computer program in the memory and execute following operations:
receiving, through the transceiver, position information of the terminal, and determining, according to the position information of the terminal, an adjacent terminal of the terminal, and notifying the adjacent terminal that there is no need to send the signal for the uplink synchronization with the cell of the second satellite; and
sending, through the first satellite or the second satellite, the timing advance value to the adjacent terminal.

In some implementations, the indication information includes one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

In some implementations, when one of following conditions or a combination of following conditions are met, determining that the cell of the first satellite and the cell of the second satellite have the same cell identifier:
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

In some implementations, the processor is further configured to read the computer program in the memory and execute following operations:
before the terminal performs the synchronization process between the terminal and the cell of the second satellite, sending, through the transceiver, common information of the second satellite to the terminal, where the common information includes a scheduling time offset of the cell of the second satellite, or a TA value of the cell of the second satellite, or basic configuration information of the cell of the second satellite.

At a terminal side, an embodiment of the present application provides another synchronization apparatus in a satellite network, including:
a determination unit, configured to determine a cell of a first satellite and a cell of a second satellite have a same cell identifier, where the cell of the first satellite is a cell currently serving a terminal; and
a synchronization unit, configured to perform a synchronization process between the terminal and the cell of the second satellite.

At a network side, an embodiment of the present application provides another synchronization apparatus in a satellite network, including:
a first unit, configured to determine a cell of a first satellite and a cell of a second satellite have a same cell identifier; where the cell of the first satellite is a cell currently serving a terminal; and
a second unit, configured to send indication information for notifying the terminal in the cell of the first satellite to perform a synchronization process between the terminal and the cell of the second satellite.

Another embodiment of the present application provides a processor readable storage medium, where the processor readable storage medium stores a computer program, the computer program is used for enabling the processor to execute any method described above.

### BRIEF DESCRIPTION OF DRAWINGS

In order to make the purpose, technical solution, and advantages of the embodiments of the present application clearer, the drawings that need to be used in the description of the embodiments will be briefly introduced in the following. Obviously, the drawings in the following description are intended for some embodiments of the present application. For those of ordinary skill in the art, other drawings can be obtained according to these drawings without any creative effort.
FIG. 1 is a schematic diagram of a quasi-earth fixed cell in the prior art.
FIG. 2 is a schematic diagram that gNB1 provides services to an area A through the first satellite at time instant T1 and continues to provide services to the area A through the second satellite at time instant T2, as provided in an embodiment of the present application.
FIG. 3 shows a schematic diagram that during a period of time when the first satellite and the first satellite both cover an area A, both satellites are connected to gNB 1 and provide the same cell coverage for the area A, as provided in an embodiment of the present application.
FIG. 4 is a schematic flowchart of a synchronization method between a terminal side and a network side in a first embodiment provided in embodiments of the present application.
FIG. 5 is a schematic flowchart of a synchronization method between a terminal side and a network side in a second embodiment provided in embodiments of the present application.
FIG. 6 is a schematic flowchart of a synchronization method between a terminal side and a network side in a sixth embodiment provided in embodiments of the present application.
FIG. 7 shows a schematic diagram of an MAC CE in a sixth embodiment provided in embodiments of the present application.
FIG. 8 is a schematic flowchart of a synchronization method between a terminal side and a network side in a seventh embodiment provided in embodiments of the present application.
FIG. 9 is a schematic flowchart of a synchronization method in a satellite network at a terminal side provided in an embodiment of the present application.
FIG. 10 is a schematic flowchart of a synchronization method in a satellite network at a network side provided in an embodiment of the present application.
FIG. 11 is a schematic structure diagram of a synchronization apparatus in a satellite network at a terminal side provided in an embodiment of the present application.
FIG. 12 is a schematic structure diagram of a synchronization apparatus in a satellite network at a network side provided in an embodiment of the present application.
FIG. 13 is a schematic structure diagram of another synchronization apparatus in a satellite network at a terminal side provided in an embodiment of the present application.
FIG. 14 is a schematic structure diagram of another synchronization apparatus in a satellite network at a network side provided in an embodiment of the present application.

### DESCRIPTION OF EMBODIMENTS

The term "and/or" in embodiments of the present invention is only an association relationship describing associated objects, and means that there may be three kinds of relationships. For example, the expression "A and/or B" may indicate three following three cases: A exists alone, both A and B exist at the same time, and B exists alone. The character "/" generally indicates that the associated objects before and after the character are in an "or" relationship.

The term "multiple" in the embodiments of the present application refers to two or more, similar to other quantifiers.

The following will provide a clear and comprehensive description of the technical solution in the embodiments of the present application in conjunction with the drawings of the embodiments of the present application. Obviously, the described embodiments are a part of the embodiments of the present application, rather than all of them. Based on the embodiments of the present application, all other embodiments obtained by those of ordinary skill in the art without any creative effort are within the protection scope of the present application.

Embodiments of the present application provides a synchronization method and a synchronization apparatus in a satellite network, which is used to provide a solution of updating uplink/downlink synchronization for a terminal regarding a problem of uplink/downlink out-of-synchronization for the terminal caused by changes in satellite position, when the satellite providing beam coverage for an area to which the terminal belongs changes but a cell identifier is unchanged.

The method and the apparatus are based on the same application concept. Due to the similarity in the principle for solving problem between the method and the apparatus, the implementation of the apparatus and the method can be referred to each other, and the repetition will not be elaborated.

The terms "first", "second", etc., (if any) in the specification and claims of the embodiments of the present application and the drawings mentioned above are used to distinguish similar objects and do not necessarily need to be used to describe a specific order or sequence. It should be understood that the data used in this way can be interchanged in an appropriate circumstance, so that the embodiments described herein can be implemented in an order other than an order illustrated or described herein. In addition, the terms "including" and "having", as well as any variations thereof, are intended to cover non-exclusive inclusions, such as processes, methods, systems, products, or devices that contain a series of steps or units that are not necessarily limited to those clearly listed, but may include other steps or units that are not clearly listed or inherent to these processes, methods, products, or devices.

Following examples and embodiments will only be understood as illustrative examples. Although the present specification may mention "an", "one" or "some" examples or embodiments in several places, this does not mean that every such mention is related to the same example(s) or embodiment(s), nor does it mean that the feature is only applicable to a single example or embodiment. Individual features of different embodiments can also be combined to provide other embodiments. In addition, terms such as "including" and "containing" should be understood as not limiting the described embodiments to only those features already mentioned; such examples and embodiments may also include features, structures, units, modules, etc. that are not specifically mentioned.

The technical solution provided in the embodiments of the present application can be applied to various systems, especially 5G systems. For example, an applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a long term evolution advanced (Long Term Evolution Advanced, LTE-A) system, a universal mobile telecommunication system (Universal Mobile Telecommunication System, UMTS), a worldwide interoperability for microwave access (Worldwide Interoperability for Microwave Access, WiMAX) system, a 5G New Radio (New Radio, NR) system, etc. All of these multiple systems include a terminal device and a network device. The system may also include core network components, such as an evolved packet system (Evolved Packet System, EPS), a 5G System (5GS), etc.

A terminal device involved in the embodiments of the present application may refer to a device that provides voice and/or data connectivity to users, a handheld device with a wireless connection function, or other processing devices connected to a wireless modem. In different systems, names of terminal devices may also vary. For example, in a 5G system, a terminal device can be referred to as a user equipment (User Equipment, UE). A wireless terminal device can communicate with one or more core networks (Core Network, CN) via an RAN. The wireless terminal device may be a mobile terminal device, such as a mobile phone (also known as a "cellular" phone) and a computer with the mobile terminal device, for example, it may be a portable, pocket sized, handheld, built-in-computer, or vehicle-mounted mobile device, which exchange language and/or data with a wireless access network. For example, a device such as a personal communication service (Personal Communication Service, PCS) phone, a cordless phone, a session initiation protocol (Session Initiation Protocol, SIP) phone, a wireless local loop (Wireless Local Loop, WLL) station, a personal digital assistant (Personal Digital Assistant, PDA), etc. The wireless terminal device may also be referred to as a system, a subscriber unit (subscriber unit), a subscriber station (subscriber station), a mobile station (mobile station), a mobile platform (mobile), a remote station (remote station), an access point (access point), a remote terminal (remote terminal), an access terminal (access terminal), a user terminal (user terminal), a user agent (user agent), or a user device (user device), which are not limited in the embodiments of the present application.

A network device involved in the embodiments of the present application may be a base station, the base station may include multiple cells. Depending on the specific application scenario, the base station can also be referred to as an access point, or it can refer to a device in an access network that communicates with the wireless terminal device over an air interface through one or more sectors, or it can refer to other names. The network device can be used to interconvert a received air frame with an internet protocol (Internet Protocol, IP) packet, serving as a router between the wireless terminal device and the rest part of the access network, where the rest part of the access network may include an internet protocol (IP) communication network. The network device can also coordinate attribute management of the air interface. For example, the network device involved in the embodiments of the present application may be a network device (Base Transceiver Station, BTS) in a global system for mobile communication system (GSM) or a code division multiple access (CDMA), or a network device (NodeB) in a wideband code division multiple access (WCDMA), or an evolved network device (evolutional Node B, eNB or e-NodeB) in a long term evolution (LTE) system, a 5G base station in a 5G network architecture (next generation system), or a home evolved Node B (Home evolved Node B, HeNB), a relay node (relay node), a home base station (femto), a pico base station (pico), etc., which are not limited in the embodiments of the present application. In some network architectures, the network device may include a centralized unit (centralized unit, CU) node and a distributed unit (distributed unit, DU) node, the centralized unit and the distributed unit can also be geographically separated.

The network device and the terminal device can each use one or more antennas for multi input multi output (Multi Input Multi Output, MIMO) transmission between them, the MIMO transmission may be single user MIMO (Single User MIMO, SU-MIMO) or multiple user MIMO (Multiple User MIMO, MU-MIMO). According to the form and the number of an antenna combination, the MIMO transmission may be 2D-MIMO, 3D-MIMO, FD-MIMO, or massive MIMO, as well as diversity transmission, precoding transmission, beamforming transmission, etc.

In the below, various embodiments of the present application will be described in detail with reference to the specification drawings. It should be noted that the display order of the embodiments of the present application only represents an order of the embodiments and does not represent the superiority or inferiority of the technical solutions provided by the embodiments.

For an earth-fixed scenario, due to movement of a satellite, when a current cell is about to be moved, and the coverage is provided by another satellite, it will face a shortage of random access resources and signaling storms caused by a large number of UEs needing to switch in a short period of time. In practical network deployment, it can be designed and implemented that for a same area, the coverage provided by a next satellite has a same physical cell identifier (Physical Cell Identifier, PCI) and a frequency point as the coverage provided by a previous satellite. In this case, although a satellite covering a certain area has changed, a cell serving this area is unchanged, theoretically eliminating a switching process. However, even if the PCI and the frequency point of the two cells are unchanged, the delay for a UE to access a gNB through a satellite has changed due to the change in location of the satellite, and the UE needs to update uplink/downlink synchronization. Therefore, the embodiments of the present application provide a solution of updating uplink/downlink synchronization for the terminal, including solutions, such as how to trigger and complete the updating of the uplink/downlink synchronization in the scenario, and when to apply new uplink/downlink synchronization information. Among them, the application of new uplink and downlink synchronization information, that is, starting synchronization to a new satellite cell, actually the application of downlink reference time and a TA value of the new satellite cell.

First of all, for the uplink/downlink synchronization, an introduction is as below.

Downlink synchronization: a UE reads a synchronization block (Synchronization Signal/PBCH Block (SSB)), obtains, by decoding, a number of a system frame contained in a master information block (Master Information Block, MIB) and other information, and completes the downlink synchronization process. At this point, the UE can read a downlink message according to the system frame.

Uplink synchronization: to ensure the orthogonality of uplink transmission, a gNB requires that arrival time of UE signals from different frequency domain resources in a same subframe to be aligned basically. Therefore, the UE needs to perform timing advance, that is, the system frame in which the UE sends uplink data should be ahead of a corresponding downlink frame by a certain amount of time. During initial uplink synchronization, the UE triggers a random access process, and the gNB determines a timing advance (Timing Advance, TA) value based on a received preamble (preamble), and informs the UE of the timing advance amount through a random access response. Subsequently, when the UE is in a connected state, the gNB adjusts the timing advance amount for the UE through a timing adjusting command (Timing Advance Command, TAC) in a media access control control element (MAC CE) to maintain the uplink synchronization.

In the research of the 3rd Generation Partnership Project (3rd Generation Partnership Project, 3GPP) Release 17 (R17)/Release 18 (R18), a satellite serves as a transparent forwarding unit and is connected to a terrestrial base station through a communication gateway station. The cell coverage provided by the satellite depends on the configuration of the base station. For a quasi-earth fixed cell, through network architecture design and deployment implementation, it is possible to achieve an effect that a satellite covering a certain area changes without changing the cell, that is, a PCI and a frequency point of the cell serving the area are unchanged. As shown in FIG. 2, at a time instant T1, a gNB1 provides services to an area A through a first satellite, and at time instant T2, the gNB 1 continues to provide services to the area A through a second satellite. The gNB1 can configure a PCI (PCI1) and a frequency point (F1) of a cell serving the area A to be the same respectively for both the first satellite and the second satellite. Therefore, a UE in the area A will consider that there has been no change in the cell and does not need to perform processes such as switching, conditional switching, or cell reselection.

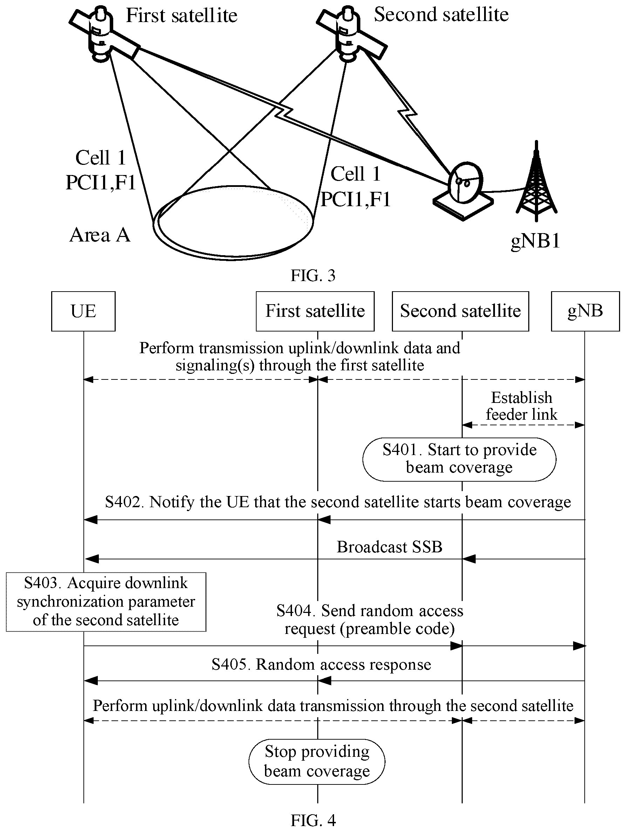

In practical network deployment, it can be that the first satellite stops covering the area A while the second satellite starts providing coverage, or there may be a time when the first satellite and the second satellite both cover the area A, that is, before the first satellite stops serving, the second satellite has already started to cover. Referring to FIG 3, if there is a period of time when the first satellite and the second satellite both cover the area A, both satellites are connected to the gNB1 and provide coverage of the same PCI and the frequency point for the area A during this period of time. That is to say, a cell of the first satellite and a cell of the second satellite are the same cell. The technical solution provided in the embodiments of the present application achieves uplink/downlink synchronization when the UE accesses the cell through the second satellite in the above scenario.

### First embodiment

Referring to FIG. 4, a specific synchronization process includes:
S401, a UE accesses a cell A through a first satellite to perform uplink/downlink transmission, a second satellite starts to provide beam coverage over the cell A from a time instant t1, the second satellite starts to broadcast, according to configuration, a synchronization signal block (SSB, specifically, it may be a cell defined SSB (Cell Defined SSB, CD-SSB) or a non cell defined synchronization signal block (Non Cell Defined SSB, NCD-SSB));
S402, a gNB sends notification information to the UE, to notify the UE that the second satellite starts to provide the beam coverage, and at the same time, and an ephemeris and common (common) TA of the second satellite, time of starting to synchronize to the cell of the second satellite, time that the first satellite stops providing beam coverage, a random access resource, related information of signal for downlink synchronization (for example, the gNB broadcasts a time-frequency position of the SSB through the second satellite), etc. may be provided;
S403, the UE determines that, according to the acquired notification information, it needs to acquire a new uplink/downlink synchronization parameter, and needs to perform an application of the uplink/downlink synchronization parameter according to an indication of the notification information.

The UE first reads the synchronization signal block SSB broadcasted by the second satellite to complete the downlink synchronization by accessing the cell A through the second satellite, but it may not be applied at this time.

S404, the UE sends a random access request message according to a random access resource configured by a network, where the random access request message includes a random access preamble code (preamble code), or other uplink signal, for example, sounding reference signal (Sounding Reference Signal, SRS). The network receives and processes the random access request message transparently transmitted by the second satellite, and determines a TA value.

S405, the gNB sends a random access response to UE through the first satellite or the second satellite, where the random access response includes a timing advance command (TAC), the TAC includes the TA value.

It should be noted that if the UE sends the random access preamble code, the network will provide a random access response as feedback; if the UE sends uplink sounding reference signal (Sounding Reference Signal, SRS), the network side may provide the media access control control element (Media Access Control CE, MAC CE), downlink control information (Downlink Control Information, DCI), or a dedicated signaling as feedback, which carries the TA value.

After receiving the TA value configured by the network, the UE immediately applies it to start to synchronize to the cell of the second satellite, or starts to synchronize to the cell of the second satellite according to the time of starting to synchronize to the cell of the second satellite acquired in step S402, and starts to perform uplink/downlink data transmission through the second satellite. At this time, the first satellite stops providing the beam coverage.

### Second embodiment

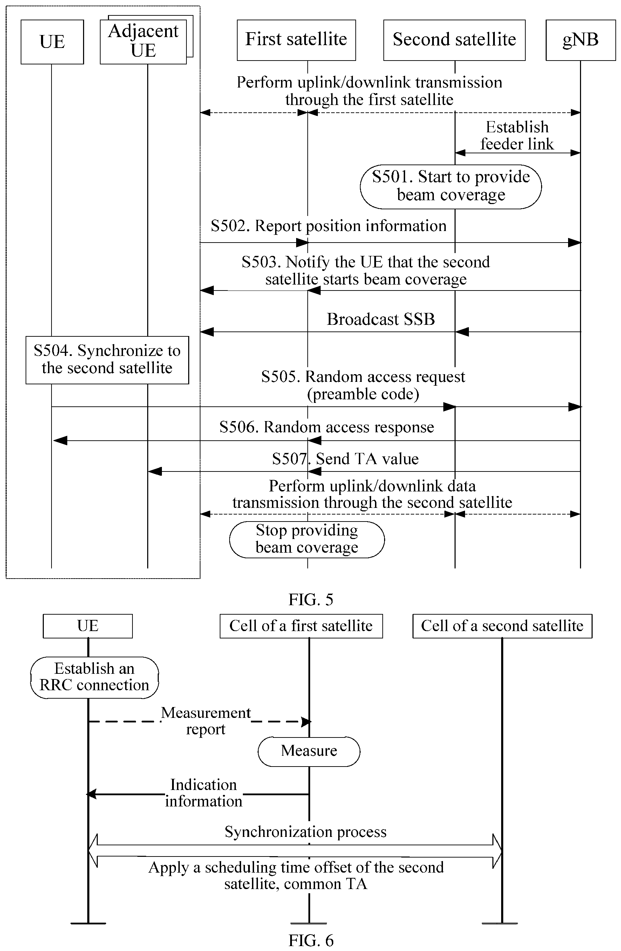

Referring to FIG. 5, a specific synchronization process includes:
S501, a UE accesses a cell A through a first satellite to perform uplink/downlink transmission, a second satellite starts to provide beam coverage from a time instant t1, the second satellite starts to broadcast, according to configuration, a synchronization signal block (SSB, it may specifically be a CD-SSB or an NCD-SSB);
S502, the UE reports position information in response to a request from a network, or actively reports the position information.

That is to say, in an embodiment of the present application, a terminal can reporting the position information to a network side in cycles or in a conditional triggering manner. The specific cycle or triggering condition(s) can be determined according to actual needs, which are not limited in the embodiments of the present application.

The purpose of the terminal reporting the position information is to enable the network side to determine an adjacent terminal of the terminal according to the position information of the terminal, and notify the adjacent terminal that there is no need to send signal for uplink synchronization with the cell of the second satellite, that is, the adjacent terminal can share the same TA value, thereby further saving signaling overhead.

S503, a gNB sends notification information to the UE, to notify the UE that the second satellite starts to provide the beam coverage, and at the same time, and an ephemeris and common (common) TA of the second satellite, time of starting to synchronize to the cell of the second satellite, time that the first satellite stops performing beam coverage, a random access resource, related information of downlink signal for synchronization (for example, the gNB broadcasts a time-frequency position of the SSB through the second satellite), etc. may be provided.

S504, the UE determines that, according to the acquired notification information, it needs to acquire a new uplink/downlink synchronization parameter, and needs to start to synchronize to the cell of the second satellite according to an indication of the notification information.

The UE first reads the synchronization signal block broadcasted by the second satellite to complete the downlink synchronization by accessing the cell A through the second satellite, but it may not be applied at this time, i.e. it temporarily performs no synchronization to the cell of the second satellite.

S505, the UE sends a random access request according to a random access resource configured by a network, where the random access request includes a preamble code, or other uplink signal, for example, SRS. The network receives and processes a random access request message transparently transmitted by the second satellite, and determines a TA value.

S506, the gNB sends a random access response to UE through the first satellite or the second satellite, where the random access response includes a timing advance command (carrying the TA value therein).

S507, the gNB sends the acquired TA value to adjacent UE(s) of the UE.

The adjacent UE, is an adjacent UE of the UE which is estimated and determined by the network according to the position information provided by the UE in S502, this adjacent UE is close in distance to the UE which obtains the TA value by sending uplink signal in the step S506. Therefore, both of the two can use the same TA value.

After receiving the TA value configured by the network, the UE and its adjacent UE(s) immediately apply it to start to synchronize to the cell of the second satellite, or start to synchronize to the cell of the second satellite according to the time of starting to synchronize to the cell of the second satellite acquired in the step S503, and start to perform uplink/downlink data transmission through the second satellite. At this time, the first satellite stops providing the beam coverage.

Combining the two embodiments described above, it can be seen that in the embodiments of the present application, the UE sends signal for uplink synchronization in accordance with configuration information according to a triggering condition. The base station obtains, according to signal received through the second satellite, TA for the UE accessing a cell through the second satellite, and sends a TA value to the UE. The UE starts to synchronize to the cell of the second satellite according to an indication.

In some implementations, the network can provide the UE at least one of following:
an indication that a cell identifier is unchanged;
an indication that the second satellite starts the coverage or UTC time that the second satellite starts the coverage;
time of the first satellite stops the coverage;
a time instant of starting to synchronize to the cell of the second satellite or an indication that how long it takes before starting to synchronize to the cell of the second satellite;
an ID, a time-frequency position, a cycle, an index, an effective time, etc. of the SRS, the SRS may be dedicated for the second satellite;
a contention based random access resource or contention free random access resource, where it may include one or more of a preamble code, a random access occasion (RO), a random access search space (RA-Searchspace), the random access resource may be dedicated for the second satellite;
ephemeris information of the second satellite;
a related parameter of a common TA of the second satellite;
an indication of requesting the UE to report the position information; or
a time position, a frequency position, etc. of the synchronization signal block broadcasted by the gNB, where the synchronization signal block may be a CD-SSB or a NCD-SSB.

In some implementations, the triggering condition may be:
an explicit indication, for example, the UE receives a physical downlink control channel order (PDCCH order) send by the network; or
an implicit indication, for example, after receiving one or more of the information described above, the UE believes that it will face uplink/downlink out-of-synchronization and needs to obtain new uplink/downlink synchronization in advance, and starts to perform an application according to the indication.

In some implementations, the gNB acquires the position information of the UE, the acquiring manner may be:
the UE reports actively, such as reporting in cycle or reporting triggered by a condition;
the UE reports in response to a request of the gNB; or
the gNB obtains a position of the UE from a location management function (Location Management Function, LMF).

In some implementations, if the UE reports the position information, the base station can also send the obtained TA value to adjacent UE(s) of the UE. The adjacent UE refers to a UE estimated by the gNB according to the position information of the UE, and the UE can be provided with the same TA as the UE that sends signal for uplink synchronization.

In some implementations, a manner of sending the TA value to the UE by the network may be:
sending a random access response to the UE through the first satellite or the second satellite, where the message includes a TA Command;
sending an MAC CE carrying the TA Command to the UE through the first satellite or the second satellite; or
sending a dedicated signaling carrying the TA Command to the UE through the first satellite or the second satellite.

In some implementations, a manner of the network providing information to the UE may be one or more of following:
broadcasting, for example, the information can be included in system information, to be broadcasted to all UEs;
a dedicated signaling, such as an RRC reconfiguration message; or
pre-configuration, when this manner is used, it may also be necessary to specify effective time of the pre-configuration message or activate it through signaling.

In some implementations, the time of starting to synchronize to the cell of the second satellite may be:
the network configures a time instant of starting to synchronize to the cell of the second satellite. This time instant may be the same for all UEs, that is, the connection of all UEs changes from the first satellite to the second satellite at the same time. This time instant may also be different for each UE, and each UE executes a new uplink/downlink synchronization parameter, that is, starts to synchronize to the cell of the second satellite, according to the time instant received by itself;
the UE immediately starts to synchronize to the cell of the second satellite after obtaining the TA configured by the network;
the network sends indication information of starting to synchronize to the cell of the second satellite to the UE, the indication can be sent separately to each UE through a dedicated signaling (i.e. different UEs may correspond to different application time or application conditions), or sent to all UEs through broadcasting (i.e. different UEs correspond to the same application time or application condition).

In the below, several specific embodiments are provided for exemplary description.

### Third embodiment

Referring to FIG. 4, a specific synchronization process provided by this embodiment includes:
the UE connects to the cell A, performs uplink/downlink signaling and data transmission by the forwarding of the first satellite; the second satellite starts to provide coverage from the time instant t1, the second satellite broadcasts the NCD-SSB according to configuration;
the gNB sends a dedicated signaling to the UE through the first satellite, the dedicated signaling includes: one bit of indication that a satellite changes but a cell is unchanged; one bit of indication that the second satellite starts to provide coverage; a time-frequency position of the NCD-SSB; and a contention free random access resource, and other information;
the UE determines that, according to the acquired message, it needs to acquire a new uplink/downlink synchronization parameter, and needs to perform an application according to an indication. The UE reads the NCD-SSB broadcasted by the second satellite, and completes the downlink synchronization by accessing the cell A through the second satellite, but it may not be applied at this time (i.e. it temporarily performs no synchronization to the cell of the second satellite);
the UE sends a preamble code according to the received contention free random access resource; the network receives and processes a random access message transparently transmitted by the second satellite, and determines the TA;
the gNB sends a random access response to the UE through the first satellite, where the random access response includes a TAC;
the UE immediately starts to synchronize to the cell of the second satellite, and starts to perform uplink/downlink transmission through the second satellite.

### Fourth embodiment

Referring to FIG. 4, a specific synchronization process includes:
the UE connects to the cell A, performs uplink/downlink signaling and data transmission by the forwarding of the first satellite; the second satellite starts to provide coverage from the time instant t1, the second satellite broadcasts the NCD-SSB according to configuration;
the gNB sends a dedicated signaling to the UE through the first satellite, the dedicated signaling includes: one bit of indication that a satellite changes but a cell is unchanged; UTC time that the second satellite starts providing the coverage; a time-frequency position of the NCD-SSB; an ID, a time-frequency position, a cycle, and an effective time of the SRS; UTC time of starting to synchronize to the cell of the second satellite;
the UE determines that, according to the acquired message, it needs to acquire a new uplink/downlink synchronization parameter, and needs to perform an application according to an indication. The UE reads the NCD-SSB broadcasted by the second satellite, and completes the downlink synchronization by accessing the cell A through the second satellite;
the UE sends SRS signal according to received SRS related configuration; the network receives and processes the SRS signal transparently transmitted by the second satellite, and obtains a TA value;
the gNB sends an MAC CE to the UE through the second satellite, the MAC CE includes a TAC;
according to the UTC time of starting to synchronize to the cell of the second satellite, the UE starts to synchronize to the cell of the second satellite, and starts to perform uplink/downlink transmission through the second satellite.

### Fifth embodiment

Referring to FIG. 5, a specific synchronization process includes:
the UE connects to the cell A, performs uplink/downlink signaling and data transmission by the forwarding of the first satellite; the second satellite starts to provide coverage from the time instant t1, the second satellite broadcasts the NCD-SSB according to configuration;
the network broadcasts an indication of requesting the UE to report position, i.e. requests, through a broadcasting manner, the UE to report position information, broadcasting one bit of indication that a satellite changes but a cell is unchanged;
the UE reports the position information of itself; the gNB determines, according to the received position information of each UE, an UE obtaining TA by sending signal for uplink synchronization and its adjacent UE(s); a condition for determining the adjacent UE is that, calculating, according to the position information reported by each UE, a UE which is close in distance to the UE sending the signal for uplink synchronization to obtain the TA (within a preset range, a specific preset range can be determined according to actual needs) and which can use the same TA value. The gNB sends a dedicated signaling to the UE through the first satellite (sends random access configuration to some selected UEs), the dedicated signaling includes: a time-frequency position of the NCD-SSB, a contention free random access resource, UTC time of starting to synchronize to the cell of the second satellite.

In some optional implementations, the gNB indicates, through a dedicated signaling, the adjacent UE that there is no need to send signal for uplink synchronization, the time-frequency position of the NCD-SSB, the UTC time of starting to synchronize to the cell of the second satellite, and other information;
the UE reads the NCD-SSB broadcasted by the second satellite, and completes the downlink synchronization by accessing the cell A through the second satellite, but it may not be applied at this time;
the UE sends a preamble code according to the received contention free random access resource; the network receives and processes a random access message transparently transmitted by the second satellite;
the gNB sends a random access response to the UE through the first satellite, where the random access response includes a TAC;
the gNB sends a dedicated signaling or an MAC CE to the adjacent UE, where the MAC CE includes a TAC;
according to the UTC time of starting to synchronize to the cell of the second satellite, the UE starts to synchronize to the cell of the second satellite, and starts to perform uplink/downlink transmission through the second satellite.

### Sixth embodiment

Referring to FIG. 6, a specific synchronization process includes:
a first step: a terminal acquires, at a cell of a source satellite (i.e. a cell of a first satellite), common information of a cell of a target satellite (i.e. a cell of a second satellite), the common information includes a scheduling time offset (cellSpecificKoffset) of the cell of the target satellite, common TA information, and other common information; the common information includes: a time difference value of downlink synchronization signal of the cell of the target satellite with respect to downlink synchronization signal of the cell of the source satellite; the downlink synchronization signal may be an SSB, or positioning reference signal (Positioning Reference Signal, PRS), or tracking reference signal (Tracking Reference Signal, TRS), or cell-specific reference signal (Cell-specific Reference Signals, CRS), which is not limited here.

A second step: issue an indication from a network side through the cell of the first satellite, so that the terminal performs a synchronization process to the cell of the target satellite.

The indication from the network side includes one or more of following information:
a delay T, used for indicating the terminal to perform, when the terminal receives the indication from the network side, the synchronization process between the terminal and the cell of the second satellite after delaying duration T;
a time instant T1, used for indicating the terminal to perform the synchronization process between the terminal and the cell of the second satellite at the time instant T1;
Preamble information of random access, where the Preamble information may be an index number of the Preamble or an index number range of the Preamble;
random access occasion (RO) information of random access, where the RO information includes time domain information and frequency domain information, and a map relationship with downlink synchronization signal;
uplink grant information, including time domain information, frequency domain information, modulation coding scheme (Modulation Coding Scheme, MCS) information, frequency modulation information, an uplink grant cycle, amount information of a hybrid automatic repeat request (Hybrid Automatic Repeat reQuest, HARQ), etc.;
TA information: TA timing advance amount for the UE performing UL transmission in the cell of the target satellite; or
a network temporary identifier of the cell of second satellite, such as a cell-radio network temporary identifier (Cell-Radio Network Temporary Identifier, C-RNTI), or a configured scheduling RNTI (Configured Scheduling RNTI, CS-RNTI), or a Group RNTI (Group RNTI, G-RNTI), or a Group Configured Scheduling RNTI (Group Configured Scheduling RNTI, G-CS-RNTI).

In some implementations, the indication from the network side may be a radio resource control (Radio Resource Control, RRC) message, an MAC CE or a DCI.

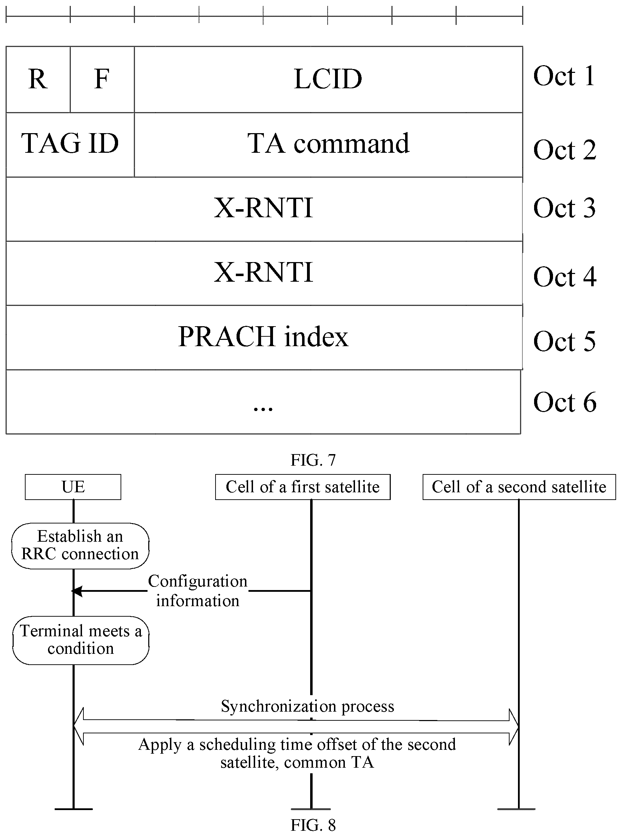

If the MAC CE is used to send the indication from the network side, a new logic channel identifier (Logic Channel ID, LCID) or an enhanced LCID (eLCID) can be defined for this MAC CE, and a format of the MAC CE is shown in FIG. 7.

If the DCI is used to send the indication from the network side, the terminal can configure a separate search space for the DCI.

A third step: after receiving the indication from the network side, the terminal applies the common information of the cell of the second satellite.

This step includes one of following operations or a combination of following operations:
the terminal performs, according to the delay T or the time instant T1, the synchronization process to the cell of the second satellite after delaying T or after the time instant T1, after receiving the indication from the network side in the second step;
the terminal calculates a downlink synchronization signal position of the cell of the second satellite, according to the time difference value of the downlink synchronization signal of the cell of the second satellite with respect to the downlink synchronization signal of the cell of the first satellite, and downlink synchronization signal information of the cell of the first satellite; and performs downlink synchronization;
applying, by the terminal, the information of the cell of the second satellite includes: updating a scheduling time offset to the scheduling time offset of the cell of the second satellite, in order to receive a random access response of a target cell and a satellite cell, or a contention resolution message, or other uplink or downlink scheduling information, or downlink data; and updating a TA advance amount of the cell to the TA advance amount of the target cell, to perform transmission of uplink data;
the terminal selects a Preamble and an RO resource according to RACH information, such as the Preamble information, the RO information, and performs random access to the cell of the second satellite;
the terminal performs data transmission with the cell of the second satellite according to C-RNTI, CS-RNTI, G-RNTI, or G-CS-RNTI information.

### Seventh embodiment

Referring to FIG. 8, a specific synchronization process includes:
a first step: a terminal acquires, at a cell of a first satellite, information of a cell of a second satellite, the information includes a scheduling time offset (cellSpecificKoffset) of the cell of the second satellite, common TA information, and other common information;
the common information includes: a time difference value of synchronization signal of the cell of the second satellite with respect to synchronization signal of the cell of the first satellite; and the synchronization signal may be an SSB or a TRS or a CRS, which is not limited here.

A second step: the cell of the first satellite configures configuration information for triggering synchronization to the cell of the second satellite, where the configuration information includes one or more of following triggering conditions:
a distance between the terminal and a first reference point is greater than a first distance threshold; and/or, a distance between the terminal and a second reference point is smaller than a second distance threshold; or
a duration of the terminal camping on the cell of the first satellite exceeds a preset duration threshold.

That is to say, when one of following conditions or a combination of following conditions are met, the terminal determines that the cell of the first satellite and the cell of the second satellite have a same cell identifier, i.e. determines that it needs to perform the synchronization process:
a distance between the terminal and the first reference point is greater than the first distance threshold;
a distance between the terminal and the second reference point is smaller than the second distance threshold; or
a duration of the terminal camping on the cell of the first satellite exceeds a duration threshold.

Among them, the first distance threshold and the second distance threshold may be the same or different.

The configuration information may carry information, such as the triggering conditions described above and threshold information involved, and in addition, the configuration information may also include following configuration information:
a delay T;
a time instant T1;
Preamble information of random access, where the Preamble information may be an index number of the Preamble or an index number range of the Preamble;
RO information of random access, where the RO information includes time domain information and frequency domain information, and a map relationship with the SSB;
uplink grant information, including time domain information, frequency domain information, MCS information, frequency modulation information, an uplink grant cycle, amount information of HARQ;
TA information: TA advance amount related to the UE; or
A C-RNTI or CS-RNTI or G-RNTI or G-CS-RNTI of the cell of the second satellite.

A third step: after receiving the configuration information described above, the terminal determines whether the triggering condition is met:
if the triggering condition is met, the terminal will apply the information of the cell of the second satellite and perform a synchronization process with the cell of the second satellite, including one of following operations or a combination of following operations:
the terminal performs, according to the delay T or the time instant T1, the synchronization process to the cell of the second satellite after delaying T or after the time instant T1, when the terminal meets the triggering condition;
the terminal calculates a synchronization signal position of the cell of the second satellite, according to the time difference value of the synchronization signal of the cell of the second satellite with respect to the synchronization signal of the cell of the first satellite, and synchronization signal information of the cell of the first satellite; and performs downlink synchronization;
applying, by the terminal, the information of the cell of the second satellite includes: updating a scheduling time offset to the scheduling time offset of the cell of the second satellite; and updating a TA advance amount of the cell to the TA advance amount of the target cell;
the terminal selects a Preamble and an RO resource according to RACH information, such as the Preamble information, the RO information, performs random access to the cell of the second satellite;
the terminal performs data transmission with the cell of the second satellite according to C-RNTI, CS-RNTI, G-RNTI, or G-CS-RNTI information.

### Eighth embodiment

A specific synchronization process includes:
a first step: when a terminal is in an idle (IDLE) or inactive (INACTIVE) state, the terminal receives a broadcast message, where the broadcast message includes basic information of a cell of a second satellite;
a second step: after a triggering condition is met, the terminal performs downlink synchronization with the cell of the second satellite or applies configuration information of the cell of the second satellite; where the triggering condition includes one or a combination of following conditions:
   a distance between the terminal and the first reference point is greater than the first distance threshold;
   a distance between the terminal and the second reference point is smaller than the second distance threshold;
   a duration of the terminal camping on a cell of a first satellite exceeds a duration threshold.

The terminal finds out that a PCI of the cell of the second satellite is consistent with a PCI of a current serving cell, i.e. the cell of the first satellite, by reading the broadcast message. For example, an indication from a network side can be sent to indicate that the PCI of the cell of the second satellite is consistent with the PCI of the cell of the first satellite, or the terminal finds out that the PCI of the cell of the second satellite is consistent with the PCI of the cell of the first satellite by reading the PCI of the cell of the second satellite. Among them, information about whether the PCI has changed in the broadcast message may be one piece of bit information or a broadcast neighbor list.

When the terminal finds out that the PCI of the cell of the second satellite is consistent with the PCI of the cell of the first satellite, the terminal will perform, when the triggering condition is met, the downlink synchronization with the cell of the second satellite, to obtain a related parameter of the cell of the second satellite, including: a scheduling time offset of the cell of the second satellite, cellSpecificKoffset, and a related parameter of TA common, etc.

### Ninth embodiment

When a terminal is in an idle (IDLE) or inactive (INACTIVE) state, the UE reads a system message broadcasted by a network;
the UE parses the read system message broadcasted by the network. If the system message includes time of a current cell stops service (t-service) (i.e. time that a first satellite stops beam coverage) and indicates that a satellite changes but the cell is unchanged, the UE will not start the measurement and a cell reselection process for an adjacent cell until the time of the current cell stops service arrives. Instead, the UE will update ephemeris, common TA, and other information based on effective time (i.e. during time when the current cell still provides service).

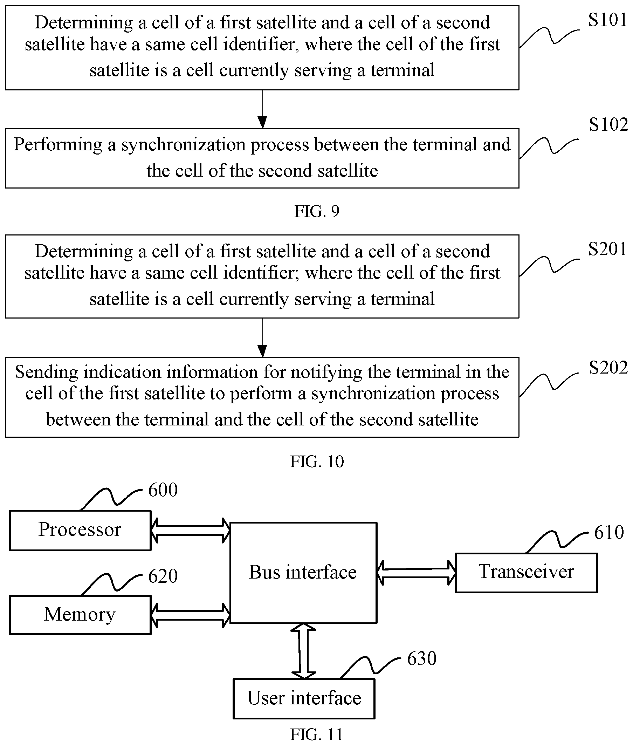

In summary, at a terminal side, referring to FIG. 9, an embodiment of the present application provides a synchronization method in a satellite network, including:
S101, determining a cell of a first satellite and a cell of a second satellite have a same cell identifier (such as a PCI or a cell global identity (Cell Global Identity, CGI) and other identifiers).

For example:
the cell of the first satellite refers to a cell that a UE is accessing through the first satellite (i.e. the cell of the first satellite is a cell currently serving the terminal);
the cell of the second satellite refers to a cell that the UE is going to access through the second satellite;
the cell of the first satellite and the cell of the second satellite having a same cell identifier or a cell identifier being unchanged refers to that both satellites connect to a same base station, the base station respectively provides a same area, and/or a same cell identifier, and/or cell coverage with a same frequency point through the two satellites. The cell of the first satellite may have an overlapping coverage time with the cell of the second satellite, that is, before the first satellite stops serving, the second satellite has already started coverage. Alternatively, the cell of the first satellite can seamlessly replace the cell of the second satellite, with the cell of the first satellite leaving while the cell of the second satellite begins to provide service.

S102, performing a synchronization process between the terminal and the cell of the second satellite.

In some implementations, the performing the synchronization process between the terminal and the cell of the second satellite includes:
when receiving indication information for a notification to perform the synchronization process between the terminal and the cell of the second satellite, performing downlink synchronization with the cell of the second satellite according to a synchronization signal block corresponding to the cell of the second satellite; and/or,
acquiring, by sending signal for uplink synchronization (such as a random access preamble code or other uplink signal), a timing advance value for accessing the cell of the second satellite.

A manner of sending the TA value to the UE may be:
sending a random access response to the UE through the first satellite or the second satellite, where the message includes a TA Command; or,
sending an MAC CE carrying the TA Command to the UE through the first satellite or the second satellite; or,
sending a dedicated signaling carrying the TA Command to the UE through the first satellite or the second satellite.

In some implementations, the indication information includes one or a combination of following information:
an indication that a cell identifier is unchanged;
an indication or time that the second satellite starts to perform beam coverage over the area;
time that the first satellite stops performing beam coverage over the area;
time of starting to synchronize to the cell of the second satellite;
information of sounding reference signal, such as an ID, a time-frequency position, a cycle, an effective time, etc. of the SRS;
random access resource information;
ephemeris information of the second satellite;
common timing advance value information of the second satellite, i.e., a related parameter of common TA;
an indication for requesting the terminal to report position information; or
signal information used by the cell of the second satellite for the downlink synchronization, i.e., a time-frequency position where the gNB broadcasts an SSB through the second satellite.

In some implementations, the acquiring, by sending the signal for uplink synchronization, the timing advance value for accessing the cell of the second satellite includes:
sending a random access preamble code or other uplink signal; and
receiving a random access response, a media access control control element MAC CE, downlink control information DCI or a dedicated signaling, and acquiring the timing advance value for accessing the cell of the second satellite.

If the UE sends the random access preamble code, the network will provide a random access response as feedback; if the UE sends the SRS, the network side may provide the MAC CE, DCI, or a dedicated signaling as feedback.

In some implementations, the method further includes:
sending position information of the terminal.

The terminal can report the position information of the terminal actively or according to the indication from the network side.

In some implementations, during the synchronization process with the cell of the second satellite, uplink/downlink synchronization is maintained with the cell of the first satellite, in order to ensure business continuity. In scenarios where two satellites do not cover simultaneously, the UE needs to pause data transmission during the process of switching between different satellite cells until the UE successfully switches to a new satellite cell. However, in the technical solution provided in the embodiments of the present application, the UE may not interrupt the data service transmission.

In some implementations, the method further includes:
starting to synchronize to the cell of the second satellite according to configuration of the network side; or,
immediately starting to synchronize to the cell of the second satellite after acquiring a timing advance value for accessing the cell through the second satellite; or,
starting to synchronize to the cell of the second satellite, when receiving an indication from the network side (it can be that an indication from the network side varies for a different UE, or it can be that indications from the network side are the same for all UEs).

In some implementations, performing, by the terminal, the synchronization process between the terminal and the cell of the second satellite includes:
performing the synchronization process between the terminal and the cell of the second satellite based on an indication from the network side, where the indication from the network side specifically includes one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

In some implementations, when one of following conditions or a combination of following conditions are met, it is determined that the cell of the first satellite and the cell of the second satellite have the same cell identifier (i.e. determines that it needs to perform the synchronization process with the cell of the second satellite):
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

Among them, the first distance threshold, the second distance threshold, and the duration threshold may all be configured by the network side for the terminal or pre-set at the terminal.

In some implementations, before performing the synchronization process between the terminal and the cell of the second satellite, the method further includes:
acquiring common information of the second satellite, where the common information includes a scheduling time offset of the cell of the second satellite, or a TA value of the cell of the second satellite, or basic configuration information of the cell of the second satellite; and
applying the common information of the second satellite.

In addition, it should be noted that in an embodiment of the present application, during the synchronization process between the UE and the cell of the second satellite, the transmission of data and signaling(s) between the UE and a base station can be transparently transmitted through both the first satellite and the second satellite simultaneously, or through only one of the satellites. The specific implementation is not limited in the present application.

Correspondingly, at a network side, such as at a base station side, referring to FIG. 10, an embodiment of the present application provides a synchronization method in a satellite network, including:
S201, determining a cell of a first satellite and a cell of a second satellite have a same cell identifier, where the cell of the first satellite is a cell currently serving a terminal.

The cell of the first satellite and the cell of the second satellite have a same cell identifier, which means the cell of the first satellite and the cell of the second satellite are the same cell.

S202, sending indication information for notifying the terminal in the cell of the first satellite to perform a synchronization process between the terminal and the cell of the second satellite.

In some implementations, the indication information includes one of following information or a combination of the following information:
an indication that a cell identifier is unchanged;
an indication or time that the second satellite starts to perform beam coverage over the area;
time that the first satellite stops performing beam coverage over the area;
time of starting to synchronize to the cell of the second satellite;
information of sounding reference signal;
random access resource information;
ephemeris information of the second satellite;
common timing advance value information of the second satellite;
an indication for requesting the terminal to report position information; or
signal information used by the cell of the second satellite for the downlink synchronization.

In some implementations, the method further includes:
sending, through the second satellite, a synchronization signal block corresponding to the cell of the second satellite, so that the terminal performs downlink synchronization with the cell of the second satellite according to the synchronization signal block corresponding to the cell of the second satellite; and/or,
receiving signal for uplink synchronization with the cell of the second satellite sent by the terminal, where the signal is transparently transmitted by the second satellite, and determining, according to the signal for the uplink synchronization with the cell of the second satellite, a timing advance value for accessing the cell of the second satellite, sending, through the first satellite or the second satellite, the timing advance value to the terminal.

In some implementations, the method further includes:
receiving position information of the terminal, and determining, according to the position information of the terminal, an adjacent terminal of the terminal, and notifying the adjacent terminal that there is no need to send the signal for the uplink synchronization with the cell of the second satellite; and
sending, through the first satellite or the second satellite, the timing advance value to the adjacent terminal.

In some implementations, the indication information includes one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

In some implementations, when one of following conditions or a combination of following conditions are met, determining that the cell of the first satellite and the cell of the second satellite have the same cell identifier:
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

In some implementations, the method further includes:
before the terminal performs the synchronization process between the terminal and the cell of the second satellite, sending common information of the second satellite to the terminal, where the common information includes a scheduling time offset of the cell of the second satellite, or a TA value of the cell of the second satellite, or basic configuration information of the cell of the second satellite.

In the below, a device or an apparatus provided in an embodiment of the present application is introduced, where explanations or examples of the same or corresponding technical features as those described in the above methods will not be repeated subsequently.

At a terminal side, referring to FIG. 11, an synchronization apparatus in a satellite network is provided by an embodiment of the present application, the apparatus includes:
a processor 600, configured to read a program in a memory 620, to execute following processes:
determining a cell of a first satellite and a cell of a second satellite have a same cell identifier, where the cell of the first satellite is a cell currently serving a terminal; and
performing a synchronization process between the terminal and the cell of the second satellite; and
a transceiver 610, configured to transmit and receive data under control of the processor 600.

In some implementations, the performing the synchronization process between the terminal and the cell of the second satellite includes:
when receiving indication information for a notification to perform the synchronization process between the terminal and the cell of the second satellite, performing downlink synchronization with the cell of the second satellite according to a synchronization signal block corresponding to the cell of the second satellite; and/or,
acquiring, by sending signal for uplink synchronization, a timing advance value for accessing the cell of the second satellite.

In some implementations, the indication information includes one of following information or a combination of the following information:
an indication that a cell identifier is unchanged;
an indication or time that the second satellite starts to perform beam coverage over the area;
time that the first satellite stops performing beam coverage over the area;
time of starting to synchronize to the cell of the second satellite;
information of sounding reference signal;
random access resource information;
ephemeris information of the second satellite;
common timing advance value information of the second satellite;
an indication for requesting the terminal to report position information; or
signal information used by the cell of the second satellite for the downlink synchronization.

In some implementations, the acquiring, by sending the signal for uplink synchronization, the timing advance value for accessing the cell of the second satellite includes:
sending a random access preamble code or other uplink signal; and
receiving a random access response, a media access control control element MAC CE, downlink control information DCI or a dedicated signaling, and acquiring the timing advance value for accessing the cell of the second satellite.

In some implementations, the processor 600 is further configured to read the computer program in the memory 620 and execute a following operation:
sending, through the transceiver 610, position information of the terminal.

In some implementations, during the synchronization process with the cell of the second satellite, uplink/downlink synchronization is maintained with the cell of the first satellite.

In some implementations, the processor 600 is further configured to read the computer program in the memory 620 and execute a following operation:
starting to synchronize to the cell of the second satellite according to configuration of the network side; or,
immediately starting to synchronize to the cell of the second satellite after acquiring a timing advance value for accessing the cell through the second satellite; or,
starting to synchronize to the cell of the second satellite, when receiving an indication from a network side.

In some implementations, the performing the synchronization process between the terminal and the cell of the second satellite includes:
performing the synchronization process between the terminal and the cell of the second satellite based on an indication from the network side, where the indication from the network side specifically includes one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

In some implementations, when one of following conditions or a combination of following conditions are met, determining that the cell of the first satellite and the cell of the second satellite have the same cell identifier:
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

In some implementations, before the performing the synchronization process between the terminal and the cell of the second satellite, the processor is further configured to read the computer program in the memory and execute following operations:
acquiring common information of the second satellite, where the common information includes a scheduling time offset of the cell of the second satellite, or a TA value of the cell of the second satellite, or basic configuration information of the cell of the second satellite; and
applying the common information of the second satellite.

In FIG. 11, a bus architecture can include any number of interconnected buses and bridges, specifically one or more processors represented by the processor 600 and various circuits of memory represented by the memory 620 are linked together. The bus architecture can also link various other circuits, such as peripheral devices, voltage regulators, power management circuits, etc. together, which are well-known in the art. Therefore, further description of them will not be repeated herein. A bus interface provides interfaces. The transceiver 610 may be multiple components, i.e. including a transmitter and a receiver, to provide a unit for communicating with various other apparatus over transmission media, the transmission media including, the transmission media includes wireless channels, wired channels, optical cables, and other transmission media. For different user devices, a user interface 630 may also be an interface that can connect externally and internally to a required device, the connected device includes but not limited to a small keyboard, a display, a speaker, a microphone, a joystick, etc.

The processor 600 is responsible for managing the bus architecture and usual processing, and the memory 620 can store data used by the processor 600 when performing an operation.

In some implementations, the processor 600 may be a CPU (central processing unit), an ASIC (Application Specific Integrated Circuit, application specific integrated circuit), an FPGA (Field Programmable Gate Array, field programmable gate array), or a CPLD (Complex Programmable Logic Device, complex programmable logic device), and the processor may also adopt a multi-core architecture.

The processor is used to execute any of the methods provided in the embodiments of the present application according to an obtained executable instruction by calling the computer program stored in the memory. The processor and the memory can also be physically separated and arranged.

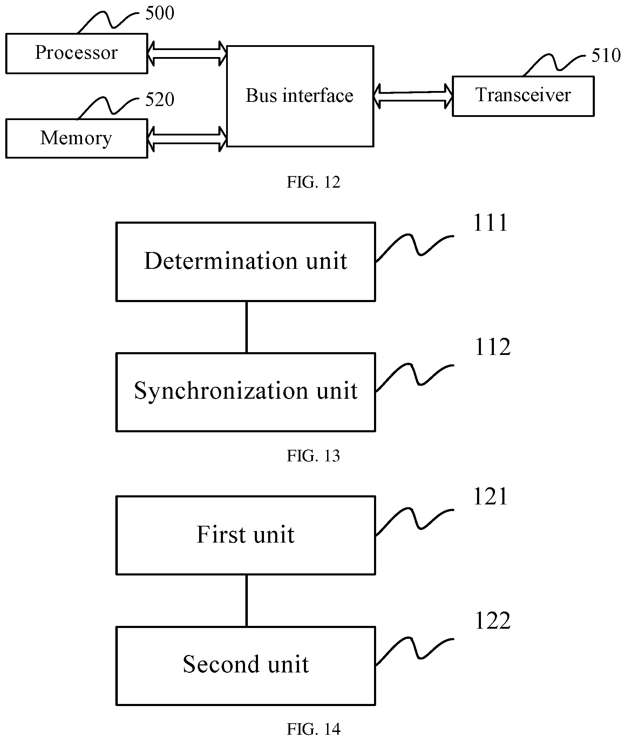

At a network side, such as at a base station side, referring to FIG. 12, an embodiment of the present application provides a synchronization apparatus in a satellite network (it can be the base station itself), including:
a processor 500, configured to read a program in a memory 520, to execute following processes:
determining a cell of a first satellite and a cell of a second satellite have a same cell identifier; where the cell of the first satellite is a cell currently serving a terminal; and
sending, through the transceiver 510, indication information for notifying the terminal in the cell of the first satellite to perform a synchronization process between the terminal and the cell of the second satellite; and
the transceiver 510, configured to transmit and receive data under control of the processor 500.

In some implementations, the processor 500 is further configured to read the computer program in the memory 520 and execute following operations:
sending, through the second satellite, a synchronization signal block corresponding to the cell of the second satellite, so that the terminal performs downlink synchronization with the cell of the second satellite according to the synchronization signal block corresponding to the cell of the second satellite; and/or,
receiving, through the transceiver 510, signal for uplink synchronization with the cell of the second satellite sent by the terminal, where the signal is transparently transmitted by the second satellite, and determining, according to the signal for the uplink synchronization with the cell of the second satellite, a timing advance value for accessing the cell of the second satellite, sending, through the first satellite or the second satellite, the timing advance value to the terminal.

In some implementations, the processor 500 is further configured to read the computer program in the memory 520 and execute following operations:
receiving, through the transceiver 510, position information of the terminal, and determining, according to the position information of the terminal, an adjacent terminal of the terminal, and notifying the adjacent terminal that there is no need to send the signal for the uplink synchronization with the cell of the second satellite; and
sending, through the first satellite or the second satellite, the timing advance value to the adjacent terminal.

In some implementations, the processor 500 is further configured to read the computer program in the memory 520 and execute following operations:
before the terminal performs the synchronization process between the terminal and the cell of the second satellite, sending, through the transceiver, common information of the second satellite to the terminal, where the common information includes a scheduling time offset of the cell of the second satellite, or a TA value of the cell of the second satellite, or basic configuration information of the cell of the second satellite.

In FIG. 12, a bus architecture can include any number of interconnected buses and bridges, specifically one or more processors represented by the processor 500 and various circuits of memory represented by the memory 520 are linked together. The bus architecture can also link various other circuits, such as peripheral devices, voltage regulators, power management circuits, etc. together, which are well-known in the art. Therefore, further description of them will not be repeated herein. A bus interface provides interfaces. The transceiver 510 may be multiple components, i.e. including a transmitter and a receiver, to provide a unit for communicating with various other apparatus over transmission media, the transmission media includes wireless channels, wired channels, optical cables, and other transmission media. The processor 500 is responsible for managing the bus architecture and usual processing, and the memory 520 can store data used by the processor 500 when performing an operation.

The processor 500 may be a central processing unit (CPU), an application specific integrated circuit (Application Specific Integrated Circuit, ASIC), a field programmable gate array (Field Programmable Gate Array, FPGA), or a complex programmable logic device (Complex Programmable Logic Device, CPLD), and the processor may also adopt a multi-core architecture.

It should be noted that the above apparatus provided in the embodiments of the present invention can achieve all method steps implemented in the above method embodiments, and can achieve the same technical effects. Therefore, specific descriptions of the same parts and beneficial effects as the method embodiments in this embodiment will not be repeated here.

At a terminal side, refer to FIG. 13, an embodiment of the present application provides another synchronization apparatus in a satellite network, including:
a determination unit 111, configured to determine a cell of a first satellite and a cell of a second satellite have a same cell identifier, where the cell of the first satellite is a cell currently serving a terminal; and
a synchronization unit 112, configured to perform a synchronization process between the terminal and the cell of the second satellite.

In some implementations, the synchronization unit 112 executes the synchronization process between the terminal and the cell of the second satellite, including:
when receiving indication information for a notification to perform the synchronization process between the terminal and the cell of the second satellite, performing downlink synchronization with the cell of the second satellite according to a synchronization signal block corresponding to the cell of the second satellite; and/or,
acquiring, by sending signal for uplink synchronization, a timing advance value for accessing the cell of the second satellite.

In some implementations, the indication information includes one of following information or a combination of the following information:
an indication that a cell identifier is unchanged;
an indication or time that the second satellite starts to perform beam coverage over the area;
time that the first satellite stops performing beam coverage over the area;
time of starting to synchronize to the cell of the second satellite;
information of sounding reference signal;
random access resource information;
ephemeris information of the second satellite;
common timing advance value information of the second satellite;
an indication for requesting the terminal to report position information; or
signal information used by the cell of the second satellite for the downlink synchronization.

In some implementations, the synchronization unit 112 acquires, by sending the signal for uplink synchronization, the timing advance value for accessing the cell of the second satellite, including:
sending a random access preamble code or other uplink signal; and
receiving a random access response, a media access control control element MAC CE, downlink control information DCI or a dedicated signaling, and acquiring the timing advance value for accessing the cell of the second satellite.

In some implementations, the synchronization unit 112 is further configured to:
send position information of the terminal.

In some implementations, the synchronization unit 112 maintains uplink/downlink synchronization with the cell of the first satellite, during the synchronization process with the cell of the second satellite.

In some implementations, the synchronization unit 112 is further configured to:
start to synchronize to the cell of the second satellite according to configuration of the network side; or,
immediately start to synchronize to the cell of the second satellite after acquiring a timing advance value for accessing the cell through the second satellite; or,
start to synchronize to the cell of the second satellite, when receiving an indication from a network side.

In some implementations, the synchronization unit 112 terminal performs the synchronization process between the terminal and the cell of the second satellite, including:
performing the synchronization process between the terminal and the cell of the second satellite based on an indication from the network side, where the indication from the network side specifically includes one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

In some implementations, when one of following conditions or a combination of following conditions are met, the determination unit 111 determines that the cell of the first satellite and the cell of the second satellite have the same cell identifier:
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

In some implementations, before the performing the synchronization process between the terminal and the cell of the second satellite, the synchronization unit 112 is further configured to:
acquire common information of the second satellite, where the common information includes a scheduling time offset of the cell of the second satellite, or a TA value of the cell of the second satellite, or basic configuration information of the cell of the second satellite; and
apply the common information of the second satellite.

At a network side, referring to FIG. 14, an embodiment of the present application provides another synchronization apparatus in a satellite network, including:
a first unit 121, configured to determine a cell of a first satellite and a cell of a second satellite have a same cell identifier; where the cell of the first satellite is a cell currently serving a terminal; and
a second unit 122, configured to send indication information for notifying the terminal in the cell of the first satellite to perform a synchronization process between the terminal and the cell of the second satellite.

In some implementations, the indication information includes one of following information or a combination of the following information:
an indication that a cell identifier is unchanged;
an indication or time that the second satellite starts to perform beam coverage over the area;
time that the first satellite stops performing beam coverage over the area;
time of starting to synchronize to the cell of the second satellite;
information of sounding reference signal;
random access resource information;
ephemeris information of the second satellite;
common timing advance value information of the second satellite;
an indication for requesting the terminal to report position information; or
signal information used by the cell of the second satellite for the downlink synchronization.

In some implementations, the second unit 122 is further configured to:
send, through the second satellite, a synchronization signal block corresponding to the cell of the second satellite, so that the terminal performs downlink synchronization with the cell of the second satellite according to the synchronization signal block corresponding to the cell of the second satellite; and/or,
receive signal for uplink synchronization with the cell of the second satellite sent by the terminal, where the signal is transparently transmitted by the second satellite, and determine, according to the signal for the uplink synchronization with the cell of the second satellite, a timing advance value for accessing the cell of the second satellite, send, through the first satellite or the second satellite, the timing advance value to the terminal.

In some implementations, the second unit 122 is further configured to:
receive position information of the terminal, and determine, according to the position information of the terminal, an adjacent terminal of the terminal, and notify the adjacent terminal that there is no need to send the signal for the uplink synchronization with the cell of the second satellite; and
send, through the first satellite or the second satellite, the timing advance value to the adjacent terminal.

In some implementations, the indication information includes one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

In some implementations, when one of following conditions or a combination of following conditions are met, the first unit 121 determines that the cell of the first satellite and the cell of the second satellite have the same cell identifier:
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

In some implementations, the second unit 122 is further configured to:
before the terminal performs the synchronization process between the terminal and the cell of the second satellite, send common information of the second satellite to the terminal, where the common information includes a scheduling time offset of the cell of the second satellite, or a TA value of the cell of the second satellite, or basic configuration information of the cell of the second satellite.

It should be noted that the division of the units in the embodiments of the present application is schematic and is only a logical functional division. In an actual implementation, there may be other division manners. In addition, each functional unit in each embodiment of the present application may be integrated in a single processing unit, or each unit may be physically present separately, or two or more units may be integrated in a single unit. The above integrated units can be implemented either in the form of hardware or in the form of software functional units.

The integrated units may be stored in a computer readable storage medium when implemented in the form of software function units and sold or used as an independent product. Based on this understanding, the technical solution of the present application is essentially, or a part of the technical solution which makes contribution to the prior art, or all or part of the technical solution can be embodied in the form of a software product. The computer software product may be stored in a storage medium, including several instructions for enabling a computer device (which may be a personal computer, a server, or a network device, etc.) or a processor (processor) to execute all or part of the steps of the methods in the various embodiments of the present application. The aforementioned storage media includes: a U disk, a mobile hard disk, a read-only memory (Read-Only Memory, ROM), a random access memory (Random Access Memory, RAM), a magnetic disk or an optical disk and other medium that can store program codes.

It should be noted that the above apparatus provided in the embodiments of the present invention can achieve all method steps implemented in the above method embodiments, and can achieve the same technical effects. Therefore, specific descriptions of the same parts and beneficial effects as the method embodiments in this embodiment will not be repeated here.

An embodiment of the present application provides a processor readable storage medium, where the processor readable storage medium stores a computer program, the computer program is used for enabling the processor to execute any method provided in the above embodiments of the present application.

The processor readable storage medium may be any available medium or data storage device that can be accessed by the processor, including but not limited to a magnetic storage (such as a floppy disk, a hard disk, a magnetic tape, a magneto-optical disk (MO), etc.), an optical storage (such as CD, DVD, BD, HVD, etc.), and a semiconductor storage (such as an ROM, an EPROM, an EEPROM, a non-volatile memory (NAND FLASH), a solid state disk (SSD)), etc.

An embodiment of the present application also provides a computer program product or a computer program, the computer program product or the computer program include computer instructions, the computer instructions are stored in a computer readable storage medium. A processor of a computer device reads the computer instructions from the computer readable storage medium, and the processor executes the computer instructions, to cause the computer device to perform any of the methods described in the above embodiments. The program product can adopt any combination of one or more readable media. The readable medium may be a readable signal medium or a readable storage medium. The readable storage medium may be, for example but not limited to, a system, an apparatus, or an element of electricity, magnetism, light, electromagnetism, infrared, or semiconductors, or any combination thereof. More specific examples (non exhaustive list) of the readable storage medium include: an electrical connection having one or more wires, a portable disk, a hard drive, a random access memory (RAM), a read-only memory (ROM), an erasable programmable read-only memory (EPROM or flash memory), fiber optics, a portable compact disk read-only memory (CD-ROM), an optical storage device, a magnetic storage device, or any suitable combination thereof.

It should be understood that:
the access technology through which entities in a communication network transmit traffic may be any suitable current or future technology, such as WLAN (wireless local access network), WiMAX (worldwide interoperability for microwave access), LTE, LTE-A, 5G, Bluetooth, infrared, etc.; in addition, the embodiments can also apply wired technology, for example, IP based access technology, such as wired networks or fixed lines.

An embodiment that is suitable to be implemented as software codes or a part thereof and runs using processors or processing functions is independent of the software code, and can be specified using any known or future developed programming language, such as high-level programming languages like objective-C, C, C++, C#, Java, Python, Javascript, other scripting languages, etc., or low-level programming languages, such as machine languages or an assembly program.

The implementation of an embodiment is independent of hardware, and can be achieved using any known or future developed hardware technology or any mixture thereof, such as a microprocessor or a CPU (central processing unit), a MOS (metal oxide semiconductor), a CMOS (complementary MOS), a BiMOS (bipolar MOS), a BiCMOS (bipolar CMOS), ECL (emitter coupled logic), and/or TTL (transistor-transistor logic).

An embodiment can be implemented as an individual device, apparatus, unit, component or function, or in a distributed manner. For example, one or more processors or processing functions can be used or shared in processing, or one or more processing segments or processing parts can be used and shared in processing, where one physical processor or more than one physical processors can be used to implement one or more processing parts dedicated to specific processing as described.

The apparatus can be implemented by a semiconductor chip, a chipset, or a (hardware) module that include such chips or chipsets.

An embodiment can also be implemented as any combination of hardware and software(s), such as an ASIC (Application Specific IC (integrated circuit)) component, an FPGA (Field Programmable Gate Array) or a CPLD (Complex Programmable Logic Device) component, or a DSP (Digital Signal Processor) component.

An embodiment can also be implemented as a computer program product, including a computer usable medium embodying computer readable program codes therein, the computer readable program codes are adapted to perform processes described in the embodiment, where the computer usable medium may be a non-transitory medium.

Those of skill in the art should understand that the embodiments of the present application can be provided as methods, systems, or computer program products. Therefore, the present application may take the form of a fully hardware embodiment, a fully software embodiment, or a combination of software and hardware aspects. Moreover, the present application may take the form of a computer program product implemented on one or more computer usable storage media (including but not limited to disk storage and optical storage) including computer usable program codes.

The present application is described with reference to a flowchart and/or a block diagram of the method, device (system), and computer program product according to the embodiments of the present application. It should be understood that each procedure and/or block in the flowchart and/or the block diagram, and a combination of procedures and/or blocks in the flowchart and/or the block diagram can be implemented by the computer program instruction. These computer program instructions may be provided to a processor of a general-purpose computer, a dedicated computer, an embedded processor, or other programmable data processing device to produce a machine, such that an apparatus for implementing a function specified in one or more procedures of the flowchart and/or one or more blocks of the block diagram may be produced via the instructions executed by the processor of the computer or other programmable data processing device.

These computer program instruction may also be stored in a computer readable memory capable of directing a computer or other programmable data processors to operate in a specific manner, such that the instruction stored in the computer readable memory produce a manufacturing product including an instruction apparatus, where the instruction apparatus implements a function specified in one or more procedures of the flow chart and/or one or more blocks of the block diagram.

These computer program instructions may also be loaded onto a computer or other programmable data processing device, such that a series of operational steps may be performed on the computer or other programmable devices to produce computer-implemented processing. Therefore, the instructions executed on the computer or other programmable devices provide steps for implementing the functions specified in one or more procedures of the flowchart and/or one or more blocks of the block diagram.

Obviously, those of skill in the art can make various modifications and variations of the present application without going beyond the spirit and scope of the present application. In this way, if these modifications and variations of the present application fall within the scope of the claims of the present application and equivalent technologies thereof, the present application is also intended to include these modifications and variations.

## Claims

1. A synchronization method in a satellite network, wherein the method comprises:
determining a cell of a first satellite and a cell of a second satellite have a same cell identifier, wherein the cell of the first satellite is a cell currently serving a terminal; and
performing a synchronization process between the terminal and the cell of the second satellite.

2. The method according to claim 1, wherein the performing the synchronization process between the terminal and the cell of the second satellite comprises:
when receiving indication information for a notification to perform the synchronization process between the terminal and the cell of the second satellite, performing downlink synchronization with the cell of the second satellite according to a synchronization signal block corresponding to the cell of the second satellite; and/or,
acquiring, by sending signal for uplink synchronization, a timing advance value for accessing the cell of the second satellite.

3. The method according to claim 2, wherein the indication information comprises one of following information or a combination of the following information:
an indication that a cell identifier is unchanged;
an indication or time that the second satellite starts to perform beam coverage over the area;
time that the first satellite stops performing beam coverage over the area;
time of starting to synchronize to the cell of the second satellite;
information of sounding reference signal;
random access resource information;
ephemeris information of the second satellite;
common timing advance value information of the second satellite;
an indication for requesting the terminal to report position information; or
signal information used by the cell of the second satellite for the downlink synchronization.

4. The method according to claim 2, wherein the acquiring, by sending the signal for uplink synchronization, the timing advance value for accessing the cell of the second satellite comprises:
sending a random access preamble code or other uplink signal; and
receiving a random access response, a media access control control element MAC CE, downlink control information DCI or a dedicated signaling, and acquiring the timing advance value for accessing the cell of the second satellite.

5. The method according to claim 2, wherein the method further comprises:
sending position information of the terminal.

6. The method according to claim 1, wherein during the synchronization process with the cell of the second satellite, uplink/downlink synchronization is maintained with the cell of the first satellite.

7. The method according to claim 1, wherein the method further comprises:
starting to synchronize to the cell of the second satellite according to configuration of a network side; or,
immediately starting to synchronize to the cell of the second satellite after acquiring a timing advance value for accessing the cell through the second satellite; or,
starting to synchronize to the cell of the second satellite, when receiving an indication from a network side.

8. The method according to claim 1, wherein the performing the synchronization process between the terminal and the cell of the second satellite comprises:
performing the synchronization process between the terminal and the cell of the second satellite based on an indication from a network side, wherein the indication from the network side specifically comprises one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

9. The method according to claim 1, wherein when one of following conditions or a combination of following conditions are met, determining that the cell of the first satellite and the cell of the second satellite have the same cell identifier:
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

10. The method according to claim 1, wherein before the performing the synchronization process between the terminal and the cell of the second satellite, the method further comprises:
acquiring common information of the second satellite, wherein the common information comprises a scheduling time offset of the cell of the second satellite, or a TA value of the cell of the second satellite, or basic configuration information of the cell of the second satellite; and
applying the common information of the second satellite.

11. A synchronization method in a satellite network, wherein the method comprises:
determining a cell of a first satellite and a cell of a second satellite have a same cell identifier, wherein the cell of the first satellite is a cell currently serving a terminal; and
sending indication information for notifying the terminal in the cell of the first satellite to perform a synchronization process between the terminal and the cell of the second satellite.

12. The method according to claim 11, wherein the indication information comprises one of following information or a combination of the following information:
an indication that a cell identifier is unchanged;
an indication or time that the second satellite starts to perform beam coverage over the area;
time that the first satellite stops performing beam coverage over the area;
time of starting to synchronize to the cell of the second satellite;
information of sounding reference signal;
random access resource information;
ephemeris information of the second satellite;
common timing advance value information of the second satellite;
an indication for requesting the terminal to report position information; or
signal information used by the cell of the second satellite for the downlink synchronization.

13. The method according to claim 11, wherein the method further comprises:
sending, through the second satellite, a synchronization signal block corresponding to the cell of the second satellite, so that the terminal performs downlink synchronization with the cell of the second satellite according to the synchronization signal block corresponding to the cell of the second satellite; and/or,
receiving signal for uplink synchronization with the cell of the second satellite sent by the terminal, wherein the signal is transparently transmitted by the second satellite, and determining, according to the signal for the uplink synchronization with the cell of the second satellite, a timing advance value for accessing the cell of the second satellite, sending, through the first satellite or the second satellite, the timing advance value to the terminal.

14. The method according to claim 13, wherein the method further comprises:
receiving position information of the terminal, and determining, according to the position information of the terminal, an adjacent terminal of the terminal, and notifying the adjacent terminal that there is no need to send the signal for the uplink synchronization with the cell of the second satellite; and
sending, through the first satellite or the second satellite, the timing advance value to the adjacent terminal.

15. The method according to claim 11, wherein the indication information comprises one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

16. The method according to claim 11, wherein when one of following conditions or a combination of following conditions are met, determining that the cell of the first satellite and the cell of the second satellite have the same cell identifier:
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

17. The method according to claim 11, wherein the method further comprises:
before the terminal performs the synchronization process between the terminal and the cell of the second satellite, sending common information of the second satellite to the terminal, wherein the common information comprises a scheduling time offset of the cell of the second satellite, or a TA value of the cell of the second satellite, or basic configuration information of the cell of the second satellite.

18. A synchronization apparatus in a satellite network, comprising a memory, a transceiver, and a processor;
wherein the memory is configured to store a computer program; the transceiver is configured to transmit and/or receive data under control of the processor; the processor is configured to read the computer program in the memory and execute following operations:
determining a cell of a first satellite and a cell of a second satellite have a same cell identifier, wherein the cell of the first satellite is a cell currently serving a terminal; and
performing a synchronization process between the terminal and the cell of the second satellite.

19. The apparatus according to claim 18, wherein the performing the synchronization process between the terminal and the cell of the second satellite comprises:
when receiving indication information for a notification to perform the synchronization process between the terminal and the cell of the second satellite, performing downlink synchronization with the cell of the second satellite according to a synchronization signal block corresponding to the cell of the second satellite; and/or,
acquiring, by sending signal for uplink synchronization, a timing advance value for accessing the cell of the second satellite.

20. The apparatus according to claim 19, wherein the indication information comprises one of following information or a combination of the following information:
an indication that a cell identifier is unchanged;
an indication or time that the second satellite starts to perform beam coverage over the area;
time that the first satellite stops performing beam coverage over the area;
time of starting to synchronize to the cell of the second satellite;
information of sounding reference signal;
random access resource information;
ephemeris information of the second satellite;
common timing advance value information of the second satellite;
an indication for requesting the terminal to report position information; or
signal information used by the cell of the second satellite for the downlink synchronization.

21. The apparatus according to claim 19, wherein the acquiring, by sending the signal for uplink synchronization, the timing advance value for accessing the cell of the second satellite comprises:
sending a random access preamble code or other uplink signal; and
receiving a random access response, a media access control control element MAC CE, downlink control information DCI or a dedicated signaling, and acquiring the timing advance value for accessing the cell of the second satellite.

22. The apparatus according to claim 19, wherein the processor is further configured to read the computer program in the memory and execute a following operation:
sending, through the transceiver, position information of the terminal.

23. The apparatus according to claim 18, wherein during the synchronization process with the cell of the second satellite, uplink/downlink synchronization is maintained with the cell of the first satellite.

24. The apparatus according to claim 18, wherein the processor is further configured to read the computer program in the memory and execute a following operation:
starting to synchronize to the cell of the second satellite according to configuration of a network side; or,
immediately starting to synchronize to the cell of the second satellite after acquiring a timing advance value for accessing the cell through the second satellite; or,
starting to synchronize to the cell of the second satellite, when receiving an indication from a network side.

25. The apparatus according to claim 18, wherein the performing the synchronization process between the terminal and the cell of the second satellite comprises:
performing the synchronization process between the terminal and the cell of the second satellite based on an indication from a network side, wherein the indication from the network side specifically comprises one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

26. The apparatus according to claim 18, wherein when one of following conditions or a combination of following conditions are met, it is determined that the cell of the first satellite and the cell of the second satellite have the same cell identifier:
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

27. The apparatus according to claim 18, wherein before the performing the synchronization process between the terminal and the cell of the second satellite, the processor is further configured to read the computer program in the memory and execute following operations:
acquiring common information of the second satellite, wherein the common information comprises a scheduling time offset of the cell of the second satellite, or a TA value of the cell of the second satellite, or basic configuration information of the cell of the second satellite; and
applying the common information of the second satellite.

28. A synchronization apparatus in a satellite network, comprising a memory, a transceiver, and a processor;
wherein the memory is configured to store a computer program; the transceiver is configured to transmit and/or receive data under control of the processor; the processor is configured to read the computer program in the memory and execute following operations:
determining a cell of a first satellite and a cell of a second satellite have a same cell identifier, wherein the cell of the first satellite is a cell currently serving a terminal; and
sending, through the transceiver, indication information for notifying the terminal in the cell of the first satellite to perform a synchronization process between the terminal and the cell of the second satellite.

29. The apparatus according to claim 28, wherein the indication information comprises one of following information or a combination of the following information:
an indication that a cell identifier is unchanged;
an indication or time that the second satellite starts to perform beam coverage over the area;
time that the first satellite stops performing beam coverage over the area;
time of starting to synchronize to the cell of the second satellite;
information of sounding reference signal;
random access resource information;
ephemeris information of the second satellite;
common timing advance value information of the second satellite;
an indication for requesting the terminal to report position information; or
signal information used by the cell of the second satellite for the downlink synchronization.

30. The apparatus according to claim 28, wherein the processor is further configured to read the computer program in the memory and execute following operations:
sending, through the second satellite, a synchronization signal block corresponding to the cell of the second satellite, so that the terminal performs downlink synchronization with the cell of the second satellite according to the synchronization signal block corresponding to the cell of the second satellite; and/or,
receiving, through the transceiver, signal for uplink synchronization with the cell of the second satellite sent by the terminal, wherein the signal is transparently transmitted by the second satellite, and determining, according to the signal for the uplink synchronization with the cell of the second satellite, a timing advance value for accessing the cell of the second satellite, sending, through the first satellite or the second satellite, the timing advance value to the terminal.

31. The apparatus according to claim 30, wherein the processor is further configured to read the computer program in the memory and execute following operations:
receiving, through the transceiver, position information of the terminal, and determining, according to the position information of the terminal, an adjacent terminal of the terminal, and notifying the adjacent terminal that there is no need to send the signal for the uplink synchronization with the cell of the second satellite; and
sending, through the first satellite or the second satellite, the timing advance value to the adjacent terminal.

32. The apparatus according to claim 28, wherein the indication information comprises one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

33. The apparatus according to claim 28, wherein when one of following conditions or a combination of following conditions are met, it is determined that the cell of the first satellite and the cell of the second satellite have the same cell identifier:
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

34. The apparatus according to claim 28, wherein the processor is further configured to read the computer program in the memory and execute following operations:
before the terminal performs the synchronization process between the terminal and the cell of the second satellite, sending, through the transceiver, common information of the second satellite to the terminal, wherein the common information comprises a scheduling time offset of the cell of the second satellite, or a TA value of the cell of the second satellite, or basic configuration information of the cell of the second satellite.

35. A synchronization apparatus in a satellite network, comprising:
a determination unit, configured to determine a cell of a first satellite and a cell of a second satellite have a same cell identifier, wherein the cell of the first satellite is a cell currently serving a terminal; and
a synchronization unit, configured to perform a synchronization process between the terminal and the cell of the second satellite.

36. The apparatus according to claim 35, wherein the performing the synchronization process between the terminal and the cell of the second satellite comprises:
when receiving indication information for a notification to perform the synchronization process between the terminal and the cell of the second satellite, performing downlink synchronization with the cell of the second satellite according to a synchronization signal block corresponding to the cell of the second satellite; and/or,
acquiring, by sending signal for uplink synchronization, a timing advance value for accessing the cell of the second satellite.

37. The apparatus according to claim 36, wherein the indication information comprises one of following information or a combination of the following information:
an indication that a cell identifier is unchanged;
an indication or time that the second satellite starts to perform beam coverage over the area;
time that the first satellite stops performing beam coverage over the area;
time of starting to synchronize to the cell of the second satellite;
information of sounding reference signal;
random access resource information;
ephemeris information of the second satellite;
common timing advance value information of the second satellite;
an indication for requesting the terminal to report position information; or
signal information used by the cell of the second satellite for the downlink synchronization.

38. The apparatus according to claim 36, wherein the acquiring, by sending the signal for uplink synchronization, the timing advance value for accessing the cell of the second satellite comprises:
sending a random access preamble code or other uplink signal; and
receiving a random access response, a media access control control element MAC CE, downlink control information DCI or a dedicated signaling, and acquiring the timing advance value for accessing the cell of the second satellite.

39. The apparatus according to claim 36, wherein the synchronization unit is further configured to:
send position information of the terminal.

40. The apparatus according to claim 35, wherein during the synchronization process between the terminal and the cell of the second satellite, uplink/downlink synchronization is maintained with the cell of the first satellite.

41. The apparatus according to claim 35, wherein the synchronization unit is further configured to:
start to synchronize to the cell of the second satellite according to configuration of a network side; or,
immediately start to synchronize to the cell of the second satellite after acquiring a timing advance value for accessing the cell through the second satellite; or,
start to synchronize to the cell of the second satellite, when receiving an indication from a network side.

42. The apparatus according to claim 35, wherein the performing the synchronization process between the terminal and the cell of the second satellite comprises:
performing the synchronization process between the terminal and the cell of the second satellite based on an indication from a network side, wherein the indication from the network side specifically comprises one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

43. The apparatus according to claim 35, wherein when one of following conditions or a combination of following conditions are met, it is determined that the cell of the first satellite and the cell of the second satellite have the same cell identifier:
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

44. The apparatus according to claim 36, wherein before the performing the synchronization process between the terminal and the cell of the second satellite, the synchronization unit is further configured to:
acquire common information of the second satellite, wherein the common information comprises a scheduling time offset of the cell of the second satellite, or a TA value of the cell of the second satellite, or basic configuration information of the cell of the second satellite;
apply the common information of the second satellite.

45. A synchronization apparatus in a satellite network, comprising:
a first unit, configured to determine a cell of a first satellite and a cell of a second satellite have a same cell identifier, wherein the cell of the first satellite is a cell currently serving a terminal; and
a second unit, configured to send indication information for notifying the terminal in the cell of the first satellite to perform a synchronization process between the terminal and the cell of the second satellite.

46. The apparatus according to claim 45, wherein the indication information comprises one of following information or a combination of the following information:
an indication that a cell identifier is unchanged;
an indication or time that the second satellite starts to perform beam coverage over the area;
time that the first satellite stops performing beam coverage over the area;
time of starting to synchronize to the cell of the second satellite;
information of sounding reference signal;
random access resource information;
ephemeris information of the second satellite;
common timing advance value information of the second satellite;
an indication for requesting the terminal to report position information; or
signal information used by the cell of the second satellite for the downlink synchronization.

47. The apparatus according to claim 45, wherein the second unit is further configured to:
send, through the second satellite, a synchronization signal block corresponding to the cell of the second satellite, so that the terminal performs downlink synchronization with the cell of the second satellite according to the synchronization signal block corresponding to the cell of the second satellite; and/or,
receive signal for uplink synchronization with the cell of the second satellite sent by the terminal, wherein the signal is transparently transmitted by the second satellite, and determine, according to the signal for the uplink synchronization with the cell of the second satellite, a timing advance value for accessing the cell of the second satellite, send, through the first satellite or the second satellite, the timing advance value to the terminal.

48. The apparatus according to claim 47, wherein the second unit is further configured to:
receive position information of the terminal, and determine, according to the position information of the terminal, an adjacent terminal of the terminal, and notify the adjacent terminal that there is no need to send the signal for the uplink synchronization with the cell of the second satellite; and
send, through the first satellite or the second satellite, the timing advance value to the adjacent terminal.

49. The apparatus according to claim 45, wherein the indication information comprises one of following information or a combination of the following information:
a delay T, used for indicating the terminal to perform, when the terminal receives the indication from the network side, the synchronization process between the terminal and the cell of the second satellite after delaying duration T;
a time difference value of synchronization signal of the cell of the second satellite with respect to synchronization signal of the cell of the first satellite, used for indicating the terminal to determine a time-domain position of the synchronization signal of the cell of the second satellite based on the time difference value and perform a downlink synchronization process with the cell of the second satellite;
random access preamble code information, used for indicating the terminal to perform a random access process to the cell of the second satellite;
random access occasion information, used for indicating the terminal to perform a random access process to the cell of the second satellite;
uplink grant information, used for indicating the terminal to send uplink data to the cell of the second satellite;
timing advance information, used for indicating the terminal to send uplink data to the cell of the second satellite; or
radio network temporary identifier information of the cell of the second satellite, used for indicating the terminal to perform data transmission with the cell of the second satellite.

50. The apparatus according to claim 45, wherein when one of following conditions or a combination of following conditions are met, it is determined that the cell of the first satellite and the cell of the second satellite have the same cell identifier:
a distance between the terminal and a first reference point is greater than a first distance threshold;
a distance between the terminal and a second reference point is smaller than a second distance threshold;
a duration of the terminal camping on the cell of the first satellite exceeds a duration threshold; or
the cell of the first satellite and the cell of the second satellite have a same physical cell identifier.

51. The apparatus according to claim 45, wherein the second unit is further configured to:
before the terminal performs the synchronization process between the terminal and the cell of the second satellite, send common information of the second satellite to the terminal, wherein the common information comprises a scheduling time offset of the cell of the second satellite, or a TA value of the cell of the second satellite, or basic configuration information of the cell of the second satellite.

52. A processor readable storage medium, wherein the processor readable storage medium stores a computer program, the computer program is used for enabling the processor to execute the method according to any one of claims 1 to 17.
